(19) Europäisches Patentamt
European Patent Office
Office européen des brevets

(11) **EP 4 776 606 A1**

(12) **EUROPEAN PATENT APPLICATION**
published in accordance with Art. 153(4) EPC

(43) Date of publication:
**15.07.2026 Bulletin 2026/29**

(21) Application number: **24939517.9**

(22) Date of filing: **16.12.2024**

(51) International Patent Classification (IPC):
***H04M 1/72427*** *(2021.01)*

(52) Cooperative Patent Classification (CPC):
**H04M 1/72427**

(86) International application number:
**PCT/CN2024/139631**

(87) International publication number:
**WO 2025/241505 (27.11.2025 Gazette 2025/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.05.2024 CN 202410661429**

(71) Applicant: HUAWEI TECHNOLOGIES CO., LTD.
**Shenzhen, Guangdong 518129 (CN)**

(72) Inventors:
- **CHEN, Zhixue**
  **Shenzhen, Guangdong 518129 (CN)**
- **TIAN, Xiaojun**
  **Shenzhen, Guangdong 518129 (CN)**
- **ZHANG, Zhengya**
  **Shenzhen, Guangdong 518129 (CN)**
- **WU, Guoxing**
  **Shenzhen, Guangdong 518129 (CN)**

(74) Representative: **Isarpatent**
**Patent- und Rechtsanwälte Part G mbB
Friedrichstrasse 31
80801 München (DE)**

(54) **UI ELEMENT DISPLAY METHOD AND ELECTRONIC DEVICE**

(57) A UI element display method and an electronic device are provided, to improve a display effect of a UI element on a wallpaper on an electronic device, and improve visual experience of a user. The method includes: An electronic device displays a first interface in response to an operation of setting a first wallpaper for the electronic device. The first interface includes the first wallpaper and a UI element displayed on the first wallpaper. A value of a display parameter of the UI element corresponds to at least one of a wallpaper type of the first wallpaper and a wallpaper type of a second wallpaper. The second wallpaper is an area in which the UI element is located and that is on the first wallpaper. The wallpaper type is obtained based on at least one of lightness and a color of a wallpaper.

FIG. 22a

## Description

This application claims priority to Chinese Patent Application No. 202410661429.9, filed with the China National Intellectual Property Administration on May 24, 2024 and entitled "UI ELEMENT DISPLAY METHOD AND ELECTRONIC DEVICE", which is incorporated herein by reference in its entirety.

## TECHNICAL FIELD

This application relates to the field of terminal technologies, and in particular, to a UI element display method and an electronic device.

## BACKGROUND

With the continuous popularization of electronic devices, more users pursue higher use experience. Visual experience is an experience factor that is first considered by the user, and the visual experience is related to a display effect of a user interface (user interface, UI) element (including but not limited to various elements such as text, an icon, and a control) on a wallpaper presented on the electronic device. However, currently, the display effect of the UI element presented on the wallpaper is generally fixed, which causes poor visual experience of the user.

## SUMMARY

This application provides a UI element display method and an electronic device, to improve a display effect of a UI element on a wallpaper on an electronic device, and improve visual experience of a user.

To achieve the foregoing objective, this application uses the following technical solutions.

According to a first aspect, a UI element display method is provided, applied to an electronic device having a display. The method includes: displaying a first interface in response to an operation of setting a first wallpaper for the electronic device. The first interface includes the first wallpaper and a UI element displayed on the first wallpaper. A value of a display parameter of the UI element corresponds to at least one of a wallpaper type of the first wallpaper and a wallpaper type of a second wallpaper. The second wallpaper is an area in which the UI element is located and that is on the first wallpaper. The wallpaper type is obtained based on at least one of lightness and a color of a wallpaper. The display parameter of the UI element may be used for determining a display effect of the UI element on the electronic device.

Based on the foregoing technical solution, the value of the display parameter of the UI element presented on the electronic device corresponds to at least one of a wallpaper type of an entire wallpaper in which the UI element is located and a wallpaper type of a partial wallpaper corresponding to an area in which the UI element is located, so that the value of the display parameter of the UI element is applicable to different types of wallpapers. In addition, the value of the display parameter of the UI element determines the display effect of the UI element, so that the display effect of the UI element is applicable to different types of wallpapers. The wallpaper type may be obtained through classification based on lightness and a color of the wallpaper, so that the display effect of the UI element can be applicable to wallpapers with different lightness and colors, thereby improving the display effect of the UI element on the wallpaper, and further improving visual experience of a user. In addition, the value of the display parameter of the UI element may be set based on the wallpaper type, and an initial value and the like of the display parameter of the UI element do not need to be obtained via a third-party library or the like, thereby lowering implementation complexity.

In a possible design, the wallpaper type includes at least one of a color type and a pattern type. The color type is obtained based on a color of a wallpaper. The color type includes a preset standard color and a non-standard color. The pattern type is obtained based on lightness of a wallpaper. The pattern type includes an extreme pattern wallpaper and a non-extreme pattern wallpaper. The non-extreme pattern wallpaper includes at least one of an extremely light-color wallpaper, a light-color wallpaper, a common-pattern wallpaper, a deep-color wallpaper, and an extremely deep-color wallpaper. In this way, the color type of the wallpaper may be classified into the preset standard color and the non-standard color based on the wallpaper color, the pattern type of the wallpaper may be classified into the extreme pattern wallpaper and the non-extreme pattern wallpaper based on the lightness of the wallpaper, and the non-extreme pattern wallpaper may be further classified into at least one of the extremely light-color wallpaper, the light-color wallpaper, the common-pattern wallpaper, the deep-color wallpaper, the extremely deep-color wallpaper, and the like. The wallpaper is classified into the foregoing plurality of types based on the wallpaper color, the lightness, and the like, so that the value of the display parameter of the UI element may be set more precisely, the display effect of the UI element can be more applicable to wallpapers of different types, and the display effect of the UI element on the wallpaper is improved.

In a possible design, the color type is determined based on a closeness degree between a color of a wallpaper and the standard color. In this way, the color type of the wallpaper is determined based on the closeness degree between the color of the wallpaper and the standard color, so that the color type of the wallpaper can be classified into the standard color and the non-standard color.

In a possible design, when the closeness degree between the color of the wallpaper and the standard color satisfies a preset condition, a color type of the wallpaper is a standard color; or when the closeness degree between the color of the wallpaper and the standard color does not satisfy a preset condition, a color type of the wallpaper is a non-standard color. In this way, the color type of the wallpaper is determined depending on whether the closeness degree between the color of the wallpaper and the standard color satisfies the preset condition, so that an objective of classifying different color types can be achieved.

In a possible design, the closeness degree between the color of the wallpaper and the standard color is represented by using a Euclidean distance between the color of the wallpaper and the standard color, and both the standard color and the color of the wallpaper are described by using a Lab color space. In this way, the closeness degree between the color of the wallpaper and the standard color is represented based on the Euclidean distance between the color of the wallpaper and the standard color, and both the standard color and the color of the wallpaper are described by using the Lab color space. The Lab color space is more consistent with color perception of human eyes, so that a classification result of the color type can be more consistent with human eye perception. Therefore, when the UI element is displayed based on the color type of the wallpaper obtained through classification, the display effect of the UI element can be improved, thereby improving visual experience of the user.

In a possible design, the pattern type is determined based on at least one of a lightness variance of a wallpaper and a light-color degree of the wallpaper. The lightness variance of the wallpaper represents a dispersion degree of lightness of each pixel included in the wallpaper. The light-color degree of the wallpaper is represented by a contrast between lightness of the wallpaper and lightness of a reference color. In this way, the pattern type is classified based on the lightness variance of the wallpaper and the light-color degree represented by using the contrast between the lightness of the wallpaper and the lightness of the reference color, so that a classification result of the pattern type can be more accurate.

In a possible design, the reference color is white.

In a possible design, before the displaying the first interface, the method further includes: obtaining a pattern type of the second wallpaper; and obtaining a color type of the second wallpaper when the pattern type of the second wallpaper is a non-extreme pattern wallpaper. In this way, the pattern type of the second wallpaper is first obtained. When the pattern type of the second wallpaper is the non-extreme pattern wallpaper, the color type of the second wallpaper is obtained. The display parameter of the UI element is set with reference to the pattern type and the color type of the wallpaper in the area in which the UI element is located, and impact of a type of the wallpaper in the area in which the UI element is located on the display effect of the UI element is fully considered, so that the display effect of the UI element is better. In addition, when the pattern type of the second wallpaper is an extreme pattern wallpaper, the color type of the second wallpaper does not need to be obtained, and the value of the display parameter of the UI element may be directly set, so that efficiency of setting the value of the display parameter of the UI element can be improved, and resources can be saved.

In a possible design, after the obtaining the color type of the second wallpaper, the method further includes: obtaining a color type of the first wallpaper when the color type of the second wallpaper is a standard color; and setting the value of the display parameter of the UI element based on the color type of the first wallpaper and the color type of the second wallpaper. In this way, when the color type of the second wallpaper is the standard color, the color type of the first wallpaper further needs to be obtained. To be specific, in addition to the color type of the wallpaper of the area in which the UI element is located, the color type of the entire wallpaper further needs to be obtained. That is, not only a local color of the wallpaper of the area in which the UI element is located is considered, but also a global color of the wallpaper is considered, so that the value of the display parameter of the UI element is set more comprehensive, the display effect of the UI element is better, and it is eye-pleasing.

In a possible design, when the lightness variance of the wallpaper satisfies a fourth preset condition, the pattern type of the wallpaper is an extreme pattern wallpaper. When the lightness variance of the wallpaper does not satisfy the fourth preset condition, and the light-color degree of the wallpaper satisfies a first preset range, the pattern type of the wallpaper is an extremely light-color wallpaper. When the lightness variance of the wallpaper does not satisfy the fourth preset condition, and the light-color degree of the wallpaper satisfies a second preset range, the pattern type of the wallpaper is a light-color wallpaper. When the lightness variance of the wallpaper does not satisfy the fourth preset condition, and the light-color degree of the wallpaper satisfies a third preset range, the pattern type of the wallpaper is a common-pattern wallpaper. When the lightness variance of the wallpaper does not satisfy the fourth preset condition but satisfies a fifth preset condition, and the light-color degree of the wallpaper satisfies a fourth preset range, the pattern type of the wallpaper is a deep-color wallpaper. When the lightness variance of the wallpaper does not satisfy the fourth preset condition and does not satisfy the fifth preset condition, and the light-color degree of the wallpaper satisfies the fourth preset range, the pattern type of the wallpaper is an extremely deep-color wallpaper. In this way, a plurality of different conditions or ranges are set for the lightness variance, the light-color degree, and the like, so that a plurality of different pattern types can be classified, and pattern type classification can be detailed.

In a possible design, the UI element includes one or more of clock text, calendar text, an application icon, a name corresponding to the application icon, a lock screen widget, a lock screen application notification bar, a status bar, a signal indicator, and a battery level indicator. The display parameter of the UI element includes one or more of lightness, a color, shadow, a fuzzy radius, saturation, and transparency.

In a possible design, the display parameter of the UI element includes the lightness. Before the displaying the first interface, the method further includes: obtaining a value of lightness of the second wallpaper; and setting a value of lightness of the UI element based on the value of the lightness of the second wallpaper. In this way, in different lightness of the second wallpaper, the lightness of the UI element applicable to the lightness of the wallpaper may be set, to implement dynamic lightness setting. Alternatively, the display parameter of the UI element includes the color. Before the displaying the first interface, the method further includes: obtaining a value of a color of the first wallpaper; and setting a value of a color of the UI element based on the value of the color of the first wallpaper. In this way, for different colors of the entire wallpaper, the color of the UI element applicable to a color of the wallpaper may be set, to implement dynamic color setting.

In a possible design, the value of the color of the UI element is the same as the value of the color of the first wallpaper. In this way, a color of the entire wallpaper is directly used to assign a color to the UI element, so that a color tone of the entire wallpaper is consistent with a color tone of the UI element, and it is eye-pleasing.

In a possible design, the standard color includes black, white, and gray. The display parameter of the UI element includes the lightness. When the pattern type of the second wallpaper is an extreme pattern wallpaper, or when the pattern type of the second wallpaper is one of a common-pattern wallpaper, a light-color wallpaper, a deep-color wallpaper, and an extremely deep-color wallpaper, and the color type is a non-standard color, or when the color type of the second wallpaper is one of black and gray, the pattern type is a non-extreme pattern wallpaper, and the color type of the first wallpaper is a standard color, it indicates that the scenario is a light-color system scenario, and the value of the lightness of the UI element is a first value. Alternatively, when the pattern type of the second wallpaper is an extremely light-color wallpaper, and the color type is a non-standard color, or when the color type of the second wallpaper is white, the pattern type is a non-extreme pattern wallpaper, and the color type of the first wallpaper is a standard color, it indicates that the scenario is a light-color system scenario, and the value of the lightness of the UI element is a second value. The first value is greater than the second value. In this way, preset values of the lightness of the UI element are different for different wallpaper types. In addition, in a deep-color system scenario, set lightness of the UI element is greater than set lightness in the light-color system scenario, so that the set lightness of the UI element can be applicable to different color systems, and it can be ensured that a display effect in a scenario with the different color systems is better.

In a possible design, the first value is greater than 1, and the second value is less than 1.

In a possible design, the display parameter of the UI element includes the lightness. When the color type of the second wallpaper is a standard color, the pattern type is a first type, and the color type of the first wallpaper is a non-standard color, the value of the lightness of the UI element is greater than the value of the lightness of the second wallpaper. Alternatively, when the color type of the second wallpaper is a standard color, the pattern type is a second type, and the color type of the first wallpaper is a non-standard color, a value of the UI element is less than the value of the lightness of the second wallpaper. The first type includes one or more of a common-pattern wallpaper, a deep-color wallpaper, and an extremely deep-color wallpaper. The second type includes one or more of an extremely light-color type and a light-color type.

In a possible design, the value of the lightness of the UI element is negatively correlated with the value of the lightness of the second wallpaper.

In a possible design, when the value of the lightness of the UI element is less than the value of the lightness of the second wallpaper, the value of the lightness of the UI element is a difference obtained by subtracting a first difference from a preset lightness reference value, where the first difference is a difference between the lightness of the second wallpaper and a first preset lightness threshold. Alternatively, when the value of the lightness of the UI element is greater than the lightness of the second wallpaper, the value of the lightness of the UI element is a sum of a preset lightness reference value and a second difference, where the second difference is a difference between a second preset lightness threshold and the lightness of the second wallpaper.

In a possible design, the display parameter of the UI element includes the color. When the pattern type of the second wallpaper is an extreme pattern wallpaper, or when the pattern type of the second wallpaper is a non-extreme pattern wallpaper, and the color type is a non-standard color, or when the pattern type of the second wallpaper is a non-extreme pattern wallpaper, the color type is a standard color, and the color type of the first wallpaper is a standard color, the value of the color of the UI element is a preset value. Alternatively, when the color type of the second wallpaper is a standard color, the pattern type is a non-extreme pattern wallpaper, and the color type of the first wallpaper is a non-standard color, the value of the color of the UI element is the same as the value of the color of the first wallpaper.

In a possible design, the preset value is white.

In a possible design, the display parameter of the UI element includes the shadow. When the pattern type of the second wallpaper is an extreme pattern wallpaper, or when the pattern type of the second wallpaper is a common-pattern wallpaper, and the color type is a non-standard color, the shadow is added for the UI element.

According to a second aspect, this application provides an electronic device. The electronic device has a function of implementing the method according to any one of the first aspect and the designs of the first aspect. The function may be implemented by hardware, or may be implemented by hardware executing corresponding software. The hardware or software includes one or more modules corresponding to the foregoing functions.

According to a third aspect, an electronic device is provided, including a display, a processor, and a memory. The display and the memory are coupled to the processor. The memory is configured to store program code. The program code includes instructions. The processor reads the instructions from the memory, and the electronic device is caused to perform the method according to any one of the first aspect and the designs of the first aspect.

According to a fourth aspect, a computer-readable storage medium is provided. The computer-readable storage medium includes a computer program. When the computer program is run on an electronic device, the electronic device is caused to perform the method according to any one of the foregoing aspects and the designs of the foregoing aspects.

According to a fifth aspect, a computer program product is provided. The computer program product includes a computer program or instructions. When the computer program or the instructions are run on a computer, the computer is caused to perform the method according to any one of the foregoing aspects and the designs of the foregoing aspects.

According to a sixth aspect, this application provides a chip system, including at least one processor and at least one interface circuit. The at least one interface circuit is configured to: perform a transceiver function, and send instructions to the at least one processor. When the at least one processor executes the instructions, the at least one processor performs the method according to any one of the first aspect and the designs of the first aspect.

It should be noted that, for technical effects brought by any one of the designs of the second aspect to the sixth aspect, refer to technical effects brought by a corresponding design of the first aspect. Details are not described herein again.

## BRIEF DESCRIPTION OF DRAWINGS

FIG. 1 is a diagram of existing effects of clock text presented on wallpapers;
FIG. 2 is a schematic flowchart of a UI element display method according to an embodiment of this application;
FIG. 3 is a schematic flowchart of another UI element display method according to an embodiment of this application;
FIG. 4(1) to FIG. 4(3) are a diagram of an interface according to an embodiment of this application;
FIG. 5 is a diagram of a structure of an electronic device according to an embodiment of this application;
FIG. 6 is a diagram of a model of an RGB color space according to an embodiment of this application;
FIG. 7 is a diagram of a model of an XYZ color space according to an embodiment of this application;
FIG. 8 is a diagram of a model of a Lab color space according to an embodiment of this application;
FIG. 9 is a schematic flowchart of a method for determining a color type of a wallpaper according to an embodiment of this application;
FIG. 10 is a diagram of classification of a pattern type of a wallpaper according to an embodiment of this application;
FIG. 11 is a diagram of a process of determining relative lightness of a wallpaper according to an embodiment of this application;
FIG. 12 is a schematic flowchart of another UI element display method according to an embodiment of this application;
FIG. 13 is a diagram of a scenario of setting a wallpaper for a mobile phone according to an embodiment of this application;
FIG. 14 is a diagram of another scenario of setting a wallpaper for a mobile phone according to an embodiment of this application;
FIG. 15 to FIG. 21 are some effect diagrams according to embodiments of this application;
FIG. 22a is a schematic flowchart of another UI element display method according to an embodiment of this application;
FIG. 22b is a diagram of a structure of another electronic device according to an embodiment of this application; and
FIG. 23 is a diagram of a structure of a chip system according to an embodiment of this application.

## DESCRIPTION OF EMBODIMENTS

In the descriptions of this application, unless otherwise specified, the character "/" indicates that associated objects are in an "or" relationship. For example, A/B may represent A or B. The term "and/or" in this application merely describes an association relationship between associated objects and indicates that three relationships may exist. For example, A and/or B may indicate three cases: Only A exists, both A and B exist, or only B exists, where A and B may be singular or plural.

In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one item (piece) of a, b, or c may indicate a, b, c, a and b, a and c, b and c, and a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

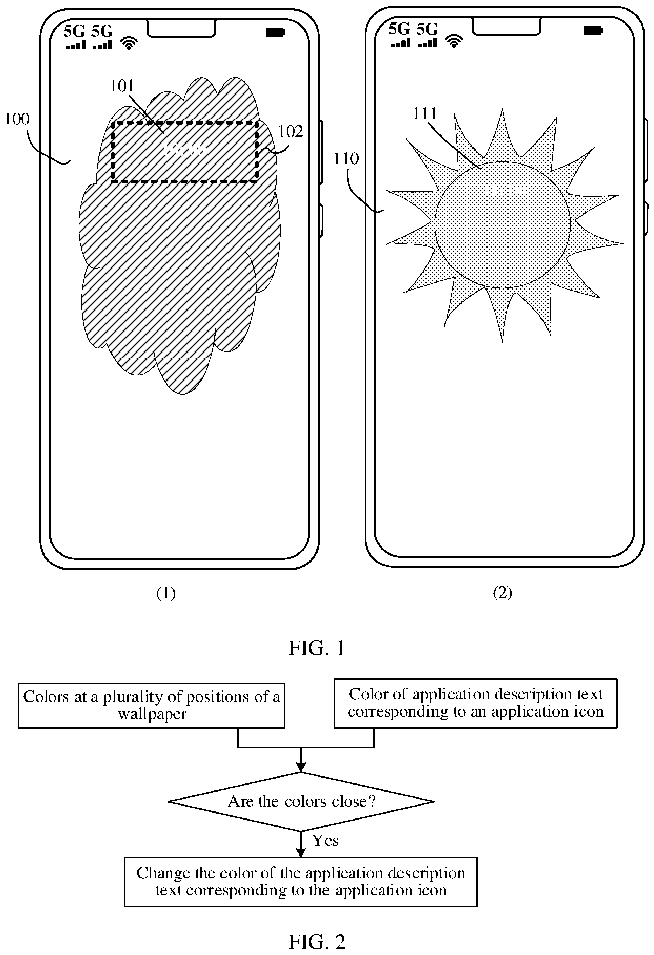

Currently, parameters such as colors and lightness of various UI elements (including but not limited to various elements such as text, icons, and controls) presented on a wallpaper of an electronic device are generally fixed. These parameters of the UI elements cannot be adaptively adjusted based on a wallpaper type. Consequently, display effects of these UI elements on the wallpaper are poor, for example, blurry, and a visual experience of a user is poor. For example, an example in which the UI element is clock text displayed on a wallpaper is used. FIG. 1 is a diagram of existing effects of clock text presented on wallpapers. As shown in (1) in FIG. 1, the clock text 101 (for example, 10:00) is presented on the wallpaper 100. As shown in (2) in FIG. 1, the clock text 111 (for example, 11:00) is presented on the wallpaper 110. Parameters of the clock text 101 and the clock text 111 are the same, but types of the wallpaper 100 and the wallpaper 110 are different. The clock text 101 and the clock text 111 are both blurry, causing poor display effects.

It may be understood that, in this embodiment of this application, different paddings are used to represent wallpaper effects, and this does not constitute a limitation on this application.

To improve a display effect of the UI element on the wallpaper, in a possible solution, as shown in FIG. 2, colors at a plurality of positions of the wallpaper and a color of application description text corresponding to an application icon may be detected, and when the two colors are similar, the color of the application description text corresponding to the application icon is changed. In this solution, determining is performed based on an existing color of the wallpaper, and there is a limitation because a color of the text and a color of the entire wallpaper are not considered. In addition, because there is an error in color display, the color cannot be accurately displayed. Therefore, this solution cannot effectively improve the display effect of the text on the wallpaper.

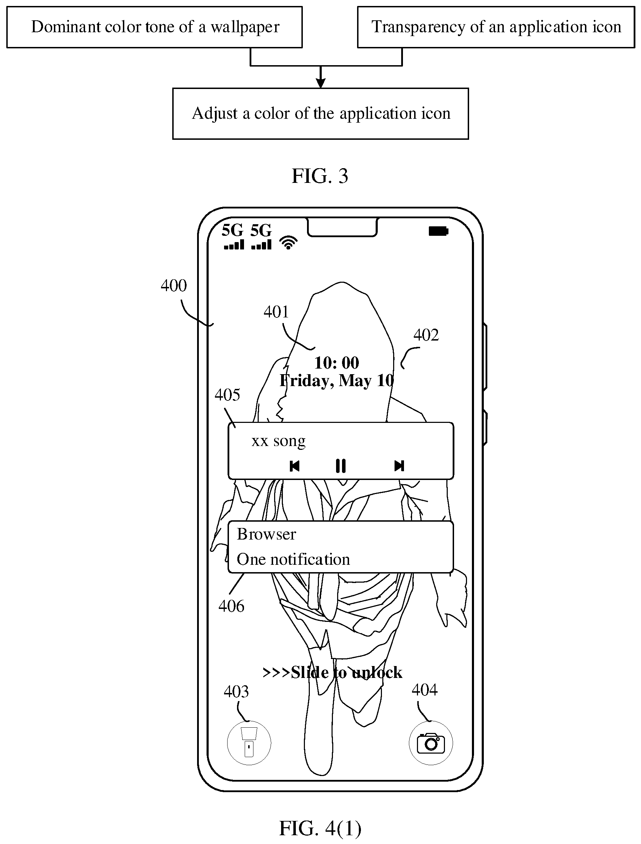

In another possible solution, as shown in FIG. 3, a dominant color tone of a wallpaper may be extracted, transparency of an application icon is obtained from a theme resource library, and then a color of the application icon is adjusted based on the dominant color tone of the wallpaper and the transparency of the application icon, so that the application icon can adapt to a color of the wallpaper. In this solution, obtaining transparency of each application icon from the theme resource library needs to be implemented via a third-party library, which causes a heavy workload of the electronic device and is time-consuming, leading to a complex implementation process.

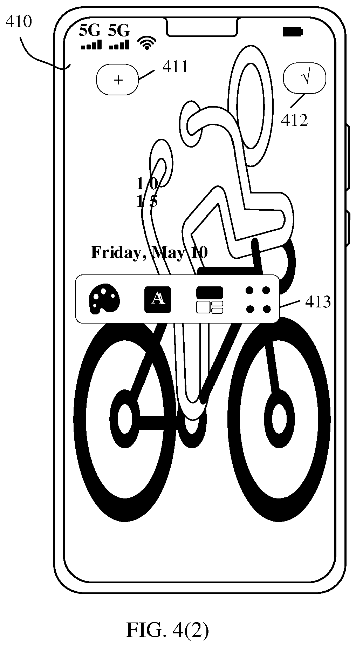

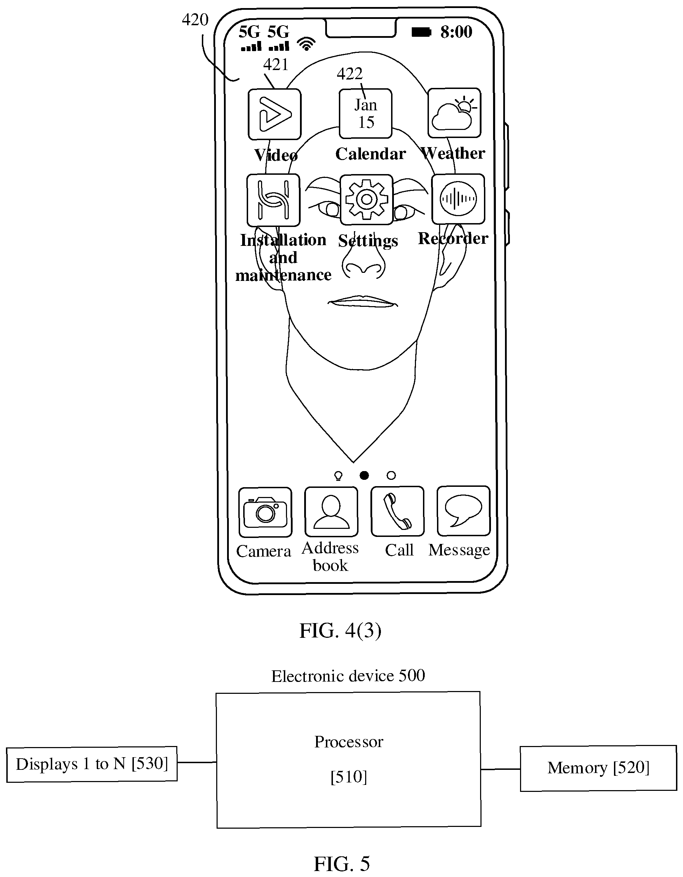

In view of this, embodiments of this application provide a UI element display method, so that not only a display effect of a UI element on a wallpaper can be improved, visual experience of a user can be improved, but also implementation complexity can be lowered. It may be understood that, in embodiments of this application, the UI element may include various UI elements displayed on the wallpaper. Optionally, the wallpaper may be a lock screen wallpaper, or may be a desktop wallpaper (that is, a wallpaper presented when the electronic device is screenunlocked). For example, the UI element includes but is not limited to one or more of clock text 401, calendar text 402, a flashlight icon 403, a camera icon 404, a lock screen application notification bar 405, a lock screen application notification bar 406, content in the lock screen application notification bars, and the like that are on a lock screen wallpaper 400 shown in FIG. 4(1), the content in the lock screen application notification bars being optionally various types of application notification messages, an addition control 411, a confirmation control 412, a menu bar 413 including various functional widget icons, and various functional widget icons included in the menu bar 413 that are on a lock screen wallpaper 410 shown in FIG. 4(2), application icons (such as an icon 421 of a video application and an icon 422 of a calendar application), descriptions (for example, names: "weather", "settings", or "recorder") of the application icons, calendar text, clock text, and the like that are displayed on a desktop wallpaper 420 shown in FIG. 4(3), a signal indicator, clock text, a battery level indicator, a charging indicator, a network indicator (for example, 4G, 5G, or LTE), and the like of a status bar displayed in the lock screen wallpaper, the desktop wallpaper, and the like.

It may be understood that a lock screen interface shown in FIG. 4(1) to FIG. 4(3) is merely an example for description for ease of understanding of this embodiment of this application. Various UI elements included in the lock screen interface may be simultaneously presented on the lock screen interface, or one or more UI elements may be additionally invoked through a user operation to be displayed on the lock screen interface.

The technical solutions provided in embodiments of this application may be applied to the electronic device, or may be applied to a system including the electronic device.

For example, the electronic device may be a mobile phone, a tablet computer, a handheld computer, a netbook, a personal digital assistant (personal digital assistant, PDA), an artificial intelligence (artificial intelligence, AI) device, or a wearable device. The wearable device includes but is not limited to any device having a display, such as a smartwatch, a smart band, and a smart anklet. An operating system installed on the electronic device includes but is not limited to iOS®, Android®, HarmonyOS®, Windows®, Linux®, or another operating system. A specific type of the electronic device and the operating system installed in the electronic device are not limited in this application.

For example, FIG. 5 is a diagram of a structure of an electronic device according to an embodiment of this application.

As shown in FIG. 5, the electronic device 500 may include a processor 510, a memory 520, a display 530, and the like.

The processor 510 may include one or more processing units. For example, the processor 510 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time-sequence signal, to control instruction fetching and instruction execution.

A memory may be further disposed in the processor 510, and is configured to store instructions and data. In some embodiments, the memory in the processor 510 is a cache. The memory may store instructions or data that has been recently used or cyclically used by the processor 510. If needing to use the instructions or the data again, the processor 510 may directly invoke the instructions or the data from the memory. This avoids repeated access and reduces waiting time of the processor 510, thereby improving system efficiency.

In some embodiments, the processor 510 may include one or more interfaces. The one or more interfaces may be configured to connect the processor 510 to the memory 520, the display 530, and the like.

In some embodiments of this application, the processor 510 may be configured to: determine a wallpaper type, and set an effect of a UI element on the wallpaper based on the wallpaper type. For details about the wallpaper type, refer to the following descriptions.

The memory 520 may be configured to store computer-executable program code. The executable program code includes instructions. The memory 520 may include a program storage area and a data storage area. The program storage area may store an operating system, an application required by at least one function (for example, an image playing function), and the like. The data storage area may store data created during use of the electronic device 500, and the like. The processor 510 runs the instructions stored in the memory 520 and/or the instructions stored in the memory disposed in the processor, to perform various functional applications and data processing of the electronic device 500.

The electronic device 500 implements a display function through the GPU, the display 530, the application processor, and the like. The GPU is a microprocessor for image processing, and is connected to the display 530 and the application processor. The GPU is configured to: perform mathematical and geometric computation, and render an image. The processor 510 may include one or more GPUs that execute program instructions to generate or change display information.

The display 530 is configured to display an image, a video, and the like. The display 530 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, quantum dot light emitting diode (quantum dot light emitting diodes, QLED), or the like. In some embodiments, the electronic device 500 may include one or N displays 530, where N is a positive integer greater than 1.

In some embodiments of this application, the display 530 may be configured to display a wallpaper and a UI element located on the wallpaper. In still some embodiments of this application, the display 530 may be further configured to receive an operation of setting a wallpaper for the electronic device 500 by the user.

It may be understood that the structure shown in embodiments of this application does not constitute a specific limitation on the electronic device. In some other embodiments of this application, the electronic device may include more or fewer components than those shown in FIG. 5. For example, the electronic device may further include a communication interface and a button, and the communication interface may be used by the electronic device to communicate with another apparatus. The button may be a mechanical button, or a touch button. Alternatively, some components are combined, or some components are split, or different components are arranged. The components shown in the figure may be implemented by hardware, software, or a combination of software and hardware.

All technical solutions in the following embodiments may be implemented in a device having the structure shown in FIG. 5.

With reference to the accompanying drawings, the following describes the technical solutions provided in embodiments of this application by using an example in which the electronic device is a mobile phone.

Embodiments of this application provide a UI element display method. A parameter of a UI element on a wallpaper may be set for the mobile phone based on different wallpaper types. In other words, a value of the parameter of the UI element corresponds to a wallpaper type, so that a display effect of the UI element can adapt to different wallpaper types, thereby improving the display effect of the UI element on the wallpaper, and further improving visual experience of the user. In addition, the parameter of the UI element does not need to be obtained via a third-party library or the like, which can lower implementation complexity.

In some implementations, wallpaper types may be classified based on different factors (such as a color and lightness). In a specific embodiment, the wallpaper type may include one or more of a color type and a pattern type. The color type may be a type obtained through classification based on a color of the wallpaper. In a possible classification result, the color type may include a plurality of types of black, white, gray, and a chromatic color. The pattern type may be a type obtained through classification based on lightness of the wallpaper. In a possible classification result, the pattern type may include an extreme pattern wallpaper and a non-extreme pattern wallpaper. The non-extreme pattern wallpaper may include one or more of an extremely light-color wallpaper, a light-color wallpaper, a common-pattern wallpaper, a deep-color wallpaper, an extremely deep-color wallpaper, and the like.

It may be understood that, in another embodiment, the wallpaper may alternatively be classified at a coarser granularity or a finer granularity based on a color, lightness, or the like of the wallpaper, or the wallpaper may be classified into other types, or the like. For example, a slightly light-color wallpaper between the extremely light-color wallpaper and the light-color wallpaper and a slightly deep-color wallpaper between the deep-color wallpaper and the extremely deep-color wallpaper may be obtained through classification based on the lightness of the wallpaper. Alternatively, the extremely light-color wallpaper and the light-color wallpaper may be combined into one type, and the deep-color wallpaper and the extremely deep-color wallpaper may be combined into one type, and the like.

It may be understood that in embodiments of this application, an example in which a preset standard color is black, white, or gray, and a non-standard color is a chromatic color is used. In another embodiment, the preset standard color may be red, green, or another color. This is not specifically limited in embodiments of this application.

The following describes a process of determining the color type of the wallpaper by using an example in which the color type includes black, white, gray, and a chromatic color.

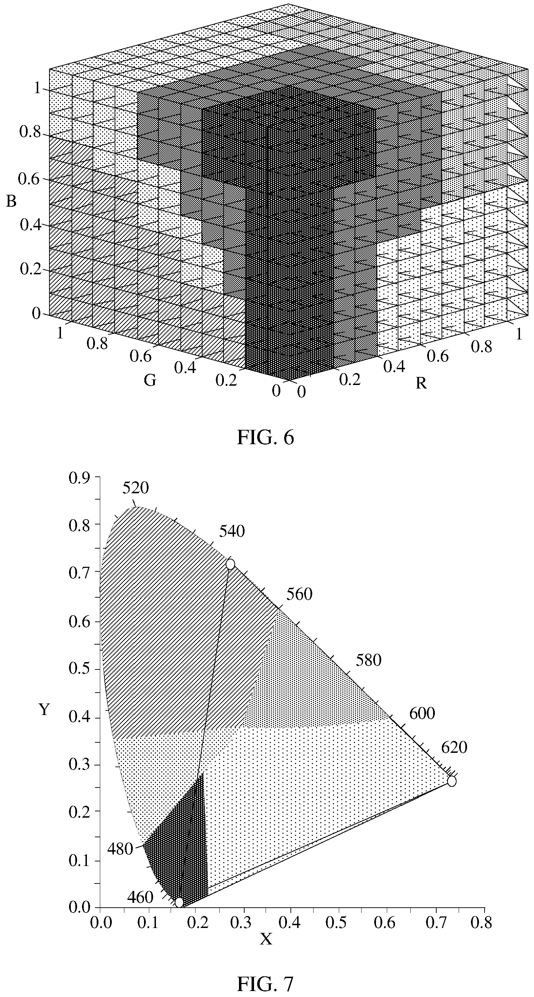

In some scenarios, the color of the wallpaper is represented based on a color space. It may be understood that, in embodiments of this application, the color space may also be referred to as a color mode, a multicolor space, a color system, or the like, and is a mathematical model used to represent a color. Common color spaces include an RGB color space, an XYZ color space, an HSV color space, and a Lab color space. The RGB color space is a color space that describes a color by using red (Red, R), green (Green, G), and blue (Blue, B) as three primary colors. For example, FIG. 6 is a diagram of a model of an RGB color space according to an embodiment of this application. The RGB color space is based on three basic colors: R, G, and B. The three basic colors can be overlaid in different degrees to generate abundant colors. Red, green, and blue represent three basic colors in a visible spectrum. Each color can be classified into 256 levels based on lightness of the color.

It may be understood that, in embodiments of this application, different paddings are used to represent different colors in FIG. 6 to FIG. 8. This is merely an example for description for ease of understanding, and an actual model of the color space may be different.

However, because not all colors in nature can be generated by combining the three primary colors: red, green, and blue used in the RGB color space, International Commission on Illumination theoretically assumes three non-existent primary colors, namely, theoretical three primary colors XYZ. In this way, a corresponding XYZ color space is generated based on the theoretical three primary colors, and the XYZ color space describes a color by using XYZ as three primary colors. X and Y represent colors, and Z represents lightness. The XYZ color space may be obtained through linear transformation on the RGB color space. For example, FIG. 7 is a diagram of a model of an XYZ color space according to an embodiment of this application.

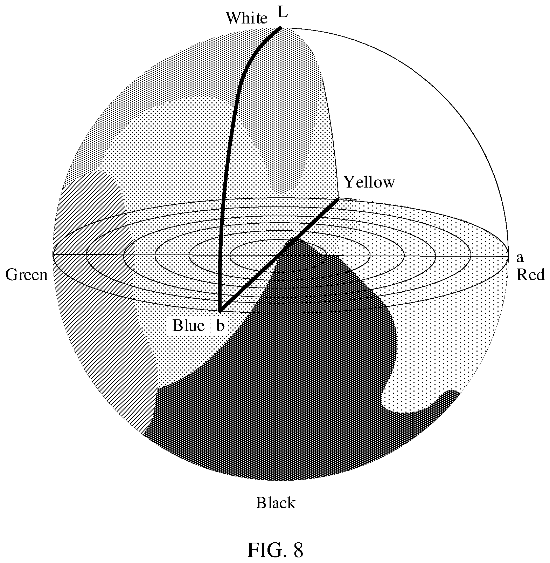

The RGB color space is linear and orthogonal, but a visual system of human eyes is not linear. Therefore, the RGB color space cannot directly reflect color perception of human eyes. Therefore, the Lab color space is proposed. The Lab color space can describe all colors that human eyes can perceive. For example, FIG. 8 is a diagram of a model of a Lab color space according to an embodiment of this application. As shown in FIG. 8, L represents lightness, a value range is greater than or equal to 0 and less than or equal to 100, and represents a lightness level of each color from black to white. a represents a position of a color on a red and green axis, a value range is greater than or equal to -128 and less than or equal to +127, and a negative value indicates that the color is green, and a positive value indicates that the color is red. b represents a position of a color on a yellow and blue axis, a value range is greater than or equal to -128 and less than or equal to +127, and a negative value indicates that the color is blue, and a positive value indicates that the color is yellow.

In some embodiments, the color of the wallpaper is described by using the RGB color space by default. However, the RGB color space cannot directly reflect the color perception of human eyes. Therefore, in some embodiments of this application, color types of the wallpaper may be classified based on the color of the wallpaper described by using the Lab color space. In this way, the color type of the wallpaper obtained through classification can be more consistent with a perception effect of human eyes. Therefore, when the UI element is displayed based on the color type of the wallpaper obtained through classification, the display effect of the UI element can be improved, thereby improving visual experience of the user.

In this embodiment, before the color types of the wallpaper are classified, a color described by using the RGB color space may be first converted into a color described by using the Lab color space. In a specific implementation, a color described by using the RGB color space may be first converted into a color described by using the XYZ color space, and then the color described by using the XYZ color space is converted into a color described by using the Lab color space, to implement conversion between the RGB color space and the Lab color space.

For example, a conversion relationship between the RGB color space and the XYZ color space may satisfy Formula 1.

$$\begin{bmatrix} X \\ Y \\ Z \end{bmatrix} = \begin{bmatrix} b_{11} & b_{12} & b_{13} \\ b_{21} & b_{22} & b_{23} \\ b_{31} & b_{32} & b_{33} \end{bmatrix} \begin{bmatrix} R \\ G \\ B \end{bmatrix} = \begin{bmatrix} 0.412453 & 0.357580 & 0.180423 \\ 0.212671 & 0.715160 & 0.072169 \\ 0.019334 & 0.119193 & 0.950227 \end{bmatrix} \begin{bmatrix} R \\ G \\ B \end{bmatrix} \qquad \text{Formula 1}$$

In Formula 1, $\begin{bmatrix} X \\ Y \\ Z \end{bmatrix}$ represents description information corresponding to a color in the XYZ color space, and $\begin{bmatrix} R \\ G \\ B \end{bmatrix}$ represents description information corresponding to the color in the RGB color space.

According to Formula 1, X, Y, Z, and sums of respective coefficients may be obtained, for example, as shown in Formula 2 to Formula 7.

$$X = b_{11} * R + b_{12} * G + b_{13} * B \qquad \text{Formula 2}$$

$$X_n = b_{11} + b_{12} + b_{13} = 0.950456 \qquad \text{Formula 3}$$

$$Y = b_{21} * R + b_{22} * G + b_{23} * B \qquad \text{Formula 4}$$

$$Y_n = b_{21} + b_{22} + b_{23} = 1.0 \qquad \text{Formula 5}$$

$$Z = b_{31} * R + b_{32} * G + b_{33} * B \qquad \text{Formula 6}$$

$$Z_n = b_{31} + b_{32} + b_{33} = 1.088754 \qquad \text{Formula 7}$$

X, Y, and Z satisfy Formula 2, Formula 4, and Formula 6, respectively. The sums of respective coefficients satisfy Formula 3, Formula 5, and Formula 7, respectively.

Values of $X_n$, $Y_n$, and $Z_n$ that respectively represent the sums of coefficients are all close to 1, and a value range of RGB satisfies an interval [0, 255]. Assuming that the sum of coefficients is 1, corresponding value ranges of X, Y, and Z also satisfy the interval [0, 255]. Further, mapping of the RGB color space and the XYZ color space in a same interval range may be implemented. Therefore, a description in the Lab color space corresponding to a color described in the XYZ color space may be obtained through calculation according to the following Formula 8 to Formula 11.

$$L^* = 116\, f(Y/Y_n) - 16 \qquad \text{Formula 8}$$

$$a^* = 500[f(X/X_n) - f(Y/Y_n)] \qquad \text{Formula 9}$$

$$b^* = 200[f(Y/Y_n) - f(Z/Z_n)] \qquad \text{Formula 10}$$

$$f(t) = \begin{cases} t^{1/3} & \text{if } t > \left(\frac{6}{29}\right)^3 \\ \frac{1}{3}\left(\frac{29}{6}\right)^2 t + \frac{4}{29} & \text{otherwise} \end{cases} \qquad \text{Formula 11}$$

In Formula 8 to Formula 11, L*, a*, and b* respectively represent corresponding descriptions in the Lab color space.

Then, after the color of the wallpaper described by using the RGB color space is converted into a description corresponding to the Lab color space in the manner described above, the color types of the wallpaper may be classified based on the color of the wallpaper described by using the Lab color space. It may be understood that, when the color of the wallpaper is described by using the Lab color space by default, the foregoing operation of conversion between the RGB color space and the Lab color space may not be performed.

In some embodiments, whether two colors are close (which is also referred to as similar) may be determined by calculating a color distance between the two colors. A shorter color distance indicates that the two colors are closer. Otherwise, a difference between the two colors is greater. For example, the color distance between the two colors may be calculated according to Formula 12.

$$|C_1 - C_2| = \sqrt{(C_{1,R} - C_{2,R})^2 + (C_{1,G} - C_{2,G})^2 + (C_{1,b} - C_{2,B})^2} \quad \text{Formula 12}$$

In Formula 12, $C_1$ and $C_2$ represent two colors. $|C_1 - C_2|$ represents a color distance between the two colors. $C_{1,R}$ and $C_{2,R}$ represent R values corresponding to the two colors in the RGB color space (also briefly referred to as R channels corresponding to the two colors). $C_{1,G}$ and $C_{2,G}$ represent G values corresponding to the two colors in the RGB color space. $C_{1,B}$ and $C_{2,B}$ represent B values corresponding to the two colors in the RGB color space.

In some embodiments of this application, the color type of the wallpaper may be determined by determining a closeness degree between the color of the wallpaper and black, white, or gray. For example, when it is determined that the closeness degree between the color of the wallpaper and black satisfies a first preset condition, it may be determined that the color type of the wallpaper is black. When it is determined that the closeness degree between the color of the wallpaper and white satisfies a second preset condition, it may be determined that the color type of the wallpaper is white. When it is determined that the closeness degree between the color of the wallpaper and gray satisfies a third preset condition, it may be determined that the color type of the wallpaper is gray. When it is determined that none of the closeness degrees between the color of the wallpaper and black, white, and gray satisfies a corresponding preset condition, it may be determined that the color type of the wallpaper is a chromatic color.

In this embodiment, in a possible implementation, with reference to Formula 12, a closeness degree between two colors may alternatively be determined by calculating a color distance (which may also be referred to as a Euclidean distance) between the color of the wallpaper and black, white, or gray. In other words, the closeness degree between the two colors may be represented by using a color distance between the two colors. For example, the color distance between the color of the wallpaper and black, white, or gray may satisfy Formula 13.

$$\Delta E = \sqrt{(L_1 - L_2)^2 + (a_1 - a_2)^2 + (b_1 - b_2)^2} \quad \text{Formula 13}$$

In Formula 13, $\Delta E$ represents a color distance between the color of the wallpaper and any one of black, white, and gray. $L_1$, $a_1$, and $b_1$ represent descriptions corresponding to the color of the wallpaper in the Lab color space. $L_2$, $a_2$, and $b_2$ represent descriptions corresponding to the any one of black, white, and gray in the Lab color space. Optionally, $L_1$ and $L_2$ may be obtained according to the foregoing Formula 8.

With reference to the manner of determining the closeness degree between the color of the wallpaper and black, white, or gray in this embodiment, in a possible implementation, the first preset condition may include that a color distance between the color of the wallpaper and black is less than a first threshold. For example, the first threshold may be 10. The second preset condition may include that a color distance between the color of the wallpaper and white is less than a second threshold. For example, the second threshold may be 10. The third preset condition may include that a color distance between the color of the wallpaper and gray is less than a third threshold. For example, the third threshold may be 2.3. It may be understood that specific values of the first threshold, the second threshold, the third threshold, and the like may be related to a color observation error of human eyes, and may be determined by a developer based on a wallpaper effect. The specific values may be the same or may be different, and this is not specifically limited in embodiments of this application.

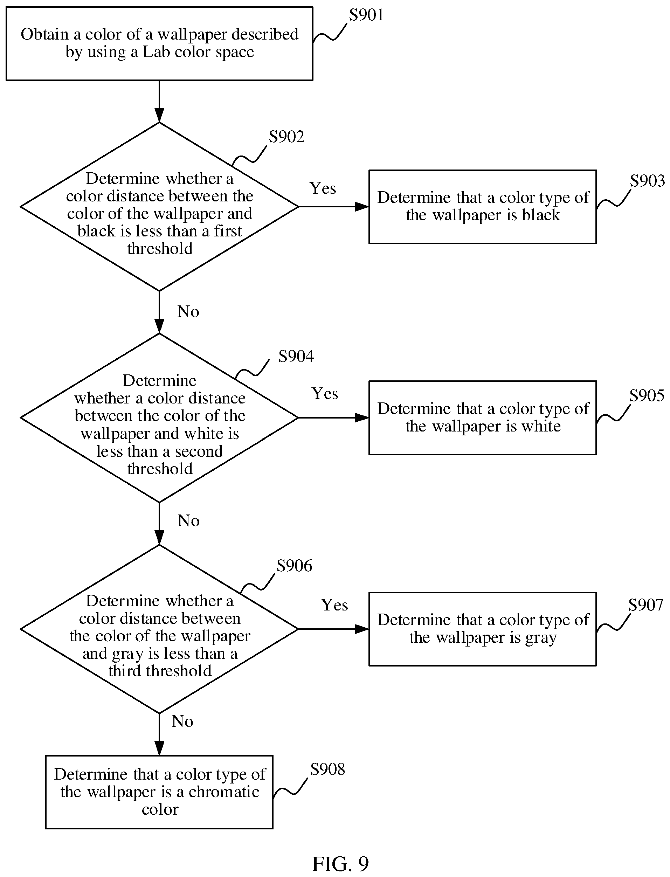

In this implementation, FIG. 9 is a schematic flowchart of a method for determining a color type of a wallpaper according to an embodiment of this application. As shown in FIG. 9, a procedure includes the following steps.

S901: Obtain a color of a wallpaper described by using a Lab color space.

It may be understood that, when the color of the wallpaper is described by using another color space (for example, an RGB color space) other than the Lab color space by default, the color described by using the another color space may be converted into being described by using the Lab color space. In this embodiment of this application, in a subsequent step of step S901 in FIG. 9, the color of the wallpaper described by using the Lab color space in step S901 is directly briefly referred to as a color of the wallpaper.

S902: Determine whether a color distance between the color of the wallpaper and black is less than a first threshold.

If the color distance is less than the first threshold, step S903 is performed. If the color distance is greater than or equal to the first threshold, step S904 is performed.

S903: Determine that a color type of the wallpaper is black.

S904: Determine whether a color distance between the color of the wallpaper and white is less than a second threshold.

If the color distance is less than the second threshold, step S905 is performed. If the color distance is greater than or equal to the second threshold, step S906 is performed.

S905: Determine that the color type of the wallpaper is white.

Optionally, an execution sequence of step S902, step S903, step S904, and step S905 is not limited. For example, step S902 and step S903 may be performed first, and then step S904 and step S905 are performed. Alternatively, step S904 and step S905 may be performed first, and then step S902 and step S903 are performed.

S906: Determine whether a color distance between the color of the wallpaper and gray is less than a third threshold.

If the color distance is less than the third threshold, step S907 is performed. If the color distance is greater than or equal to the third threshold, step S908 is performed.

S907: Determine that the color type of the wallpaper is gray.

S908: Determine that a color type of the wallpaper is a chromatic color.

Because gray is between white and black, when a condition corresponding to black or white is satisfied, a condition corresponding to gray may also be satisfied, but a color seen by human eyes is closer to black or white. Therefore, it is first determined whether the color distance to black or white satisfies a corresponding condition. When the corresponding condition is satisfied, it is determined that the color type of the wallpaper is black or white, but it is not determined that the wallpaper is gray. In this way, a determining result can be more consistent with an actual effect observed by human eyes. Therefore, type classification of the wallpaper is more accurate, and a visual effect of a user is improved.

The foregoing describes the process of determining the color type of the wallpaper, and the following describes a process of determining a pattern type of the wallpaper. The following uses an example in which the pattern type of the wallpaper includes an extreme pattern wallpaper and a non-extreme pattern wallpaper (where the non-extreme pattern wallpaper may include an extremely light-color wallpaper, a light-color wallpaper, a common-pattern wallpaper, a deep-color wallpaper, and an extremely deep-color wallpaper).

In some embodiments, pattern types of the wallpaper may be classified based on lightness of the wallpaper.

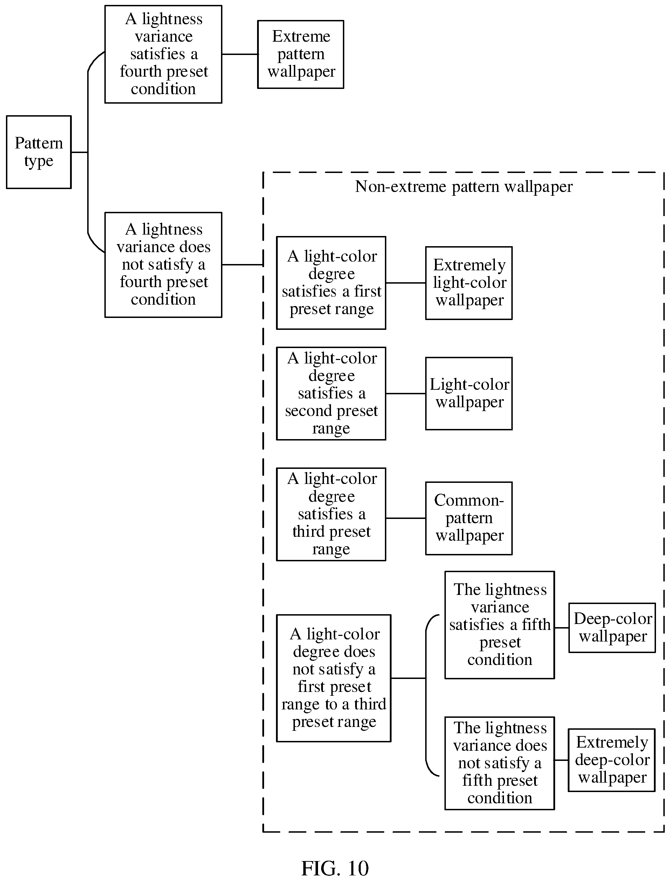

In this embodiment, in a possible implementation, the pattern types of the wallpaper may be classified based on at least one of a lightness variance, a light-color degree, and the like of the wallpaper. The lightness variance, the light-color degree, and the like of the wallpaper may be obtained based on the lightness of the wallpaper. For example, FIG. 10 is a diagram of classification of a pattern type of a wallpaper according to an embodiment of this application. As shown in FIG. 10, classification may be first performed on the wallpaper for a first time based on the lightness variance of the wallpaper. For example, when the lightness variance of the wallpaper satisfies a fourth preset condition, the pattern type of the wallpaper is an extreme pattern wallpaper. Otherwise, when the lightness variance of the wallpaper does not satisfy the fourth preset condition, the pattern type of the wallpaper is a non-extreme pattern wallpaper. For example, the fourth preset condition may include that the lightness variance is greater than or equal to a first variance threshold.

Then, classification is performed on the non-extreme pattern wallpaper for a second time based on the light-color degree of the wallpaper. For example, when the light-color degree of the wallpaper satisfies a first preset range, the pattern type of the wallpaper is an extremely light-color wallpaper. For example, the first preset range may be greater than 0 and less than 1.5. For example, when the light-color degree of the wallpaper satisfies a second preset range, the pattern type of the wallpaper is a light-color wallpaper. For example, the second preset range may be greater than or equal to 1.5 and less than 1.9. For example, when the light-color degree of the wallpaper satisfies a third preset range, the pattern type of the wallpaper is a common-pattern wallpaper. For example, the third preset range may be greater than or equal to 1.9 and less than or equal to 7. It may be understood that, in this embodiment of this application, the preset ranges are merely examples for description. In actual application, the developer may set the preset ranges based on an actual requirement.

Further, for a wallpaper whose light-color degree does not satisfy the first preset range to the third preset range, classification may be performed on the wallpaper for a third time based on the lightness variance of the wallpaper. In other words, for a wallpaper whose light-color degree satisfies a fourth preset range, classification may be performed on the wallpaper for a third time based on a lightness variance of the wallpaper. The fourth preset range is different from any one of the first preset range to the third preset range. For example, the fourth preset range may be greater than 7. For example, when the lightness variance of the wallpaper satisfies a fifth preset condition, the pattern type of the wallpaper is a deep-color wallpaper. Otherwise, when the lightness variance of the wallpaper does not satisfy the fifth preset condition, the pattern type of the wallpaper is an extremely deep-color wallpaper. For example, the fifth preset condition may include that the lightness variance is greater than or equal to a second variance threshold. The second variance threshold is less than the first variance threshold. For example, the first variance threshold may be 6000, and the second variance threshold may be 3000. The first variance threshold and the second variance threshold may be related to sensitivity of human eyes to a color difference.

The following first describes an implementation of determining the lightness variance of the wallpaper. The lightness variance of the wallpaper may represent a dispersion degree of lightness of each pixel (which are also referred to as a pixel block) included in the wallpaper.

In some embodiments, the lightness variance of the wallpaper is also a lightness variance of the wallpaper, and the lightness variance of the wallpaper may be determined based on lightness corresponding to each pixel included in the wallpaper and a quantity of pixels.

In some embodiments, to simplify a calculation operation, a lightness calculation formula may be transformed when the lightness of the wallpaper is calculated. For example, with reference to the foregoing Formula 4, Formula 5, and Formula 8, a relationship between lightness L* of the wallpaper and R, G, and B may be obtained. After Formula 4 and Formula 5 are substituted into Formula 8 to obtain an expression between L* and R, G, and B, a relationship between lightness $L^m$ and R, G, and B may be obtained by removing a constant and a coefficient in the expression, for example, Formula 14.

$$L^m = b_{21} * R + b_{22} * G + b_{23} * B \quad \text{Formula 14}$$

With reference to Formula 1, Formula 14 may be transformed into Formula 15.

$$L^m = 0.212671 * R + 0.715160 * G + 0.072169 * B \quad \text{Formula 15}$$

In this embodiment, the lightness variance of the wallpaper may be determined based on the lightness corresponding to each pixel included in the wallpaper, the quantity of pixels, and the like. For example, the lightness variance $S^2$ may be obtained through calculation according to Formula 16.

$$S^2 = \frac{\sum_{i=1}^{N}(L_i^m - \overline{L^m})^2}{N} \quad \text{Formula 16}$$

In Formula 16, $L_i^m$ represents lightness $L^m$ corresponding to an RGB value of each pixel included in the wallpaper, $\overline{L^m}$ represents an average value of all $L_i^m$, and N represents the quantity of pixels included in the wallpaper.

In this way, the lightness variance is calculated after the coefficient, the constant, and the like in the lightness of the wallpaper are removed, which can simplify a calculation operation, improve a calculation speed, and lower complexity of classification on the pattern type of the wallpaper.

The following continues to describe an implementation of determining the light-color degree of the wallpaper.

In some embodiments, the light-color degree of the wallpaper may be determined based on the lightness of the wallpaper and lightness of a light color (which is also referred to as a reference color). In a specific implementation, the light-color degree of the wallpaper may be represented by a contrast between a wallpaper (for example, relative lightness) of the wallpaper and lightness (for example, relative lightness) of the light color. The relative lightness of the wallpaper may be determined based on average lightness of the wallpaper. For example, the relative lightness of the wallpaper may be directly represented by using the average lightness of the wallpaper, or may be represented by using a value (for example, a normalized value) obtained by performing processing on the average lightness of the wallpaper. A deeper color of the wallpaper indicates lower relative lightness of the wallpaper. Similarly, the relative lightness of the light color may be determined based on average lightness of the light color. Optionally, the relative lightness of the light color may be relative lightness of white, for example, the relative lightness of white may be 1. Certainly, in another implementation, the light color may alternatively be implemented as another lighter color, for example, a color close to white.

Certainly, in another implementation, the light-color degree of the wallpaper may alternatively be represented by using a contrast between a lightness value obtained by performing another operation on the lightness of the wallpaper and a lightness value obtained by performing the same operation on the lightness of the light color. In another embodiment, the light-color degree of the wallpaper may alternatively be represented by using a contrast between relative lightness of the wallpaper and relative lightness of a deep color. For example, the deep color may be a color that is deep, for example, black, or a color close to black.

In this embodiment, in a possible example, the contrast C between the relative lightness of the wallpaper and the relative lightness of the light color may satisfy Formula 17.

$$C = \frac{L_q + 0.05}{L_s + 0.05} \quad \text{Formula 17}$$

In Formula 17, $L_q$ represents the relative lightness of the light color, and a value range of $L_q$ may be a range included in a range that is greater than or equal to 0 and less than or equal to 1. For example, the value range of $L_q$ may be greater than or equal to 0.5 and less than or equal to 1, or the value range of $L_q$ may be greater than or equal to 0.6 and less than or equal to 1, and the like. A specific value range of $L_q$ may be determined based on a definition of the developer for the light color. $L_g$ represents the relative lightness of the wallpaper, and a value range of $L_s$ may be greater than or equal to 0 and less than or equal to 1. For example, when $L_q$ is the relative lightness of white, a value of $L_q$ is 1, and correspondingly, a value range of C is 1:1 to 21:1.

It may be understood that, for each formula in embodiments of this application, an error may be eliminated by adding a constant. A position at which the constant is added is not specifically limited in embodiments of this application. This is uniformly described herein. For example, Formula 17 may be further transformed into Formula 18.

$$C = \frac{L_q + 0.05}{L_s + 0.05} + A \quad \text{Formula 18}$$

In Formula 18, A is a preset constant, and a specific value of the preset constant may be set by the developer based on an actual requirement.

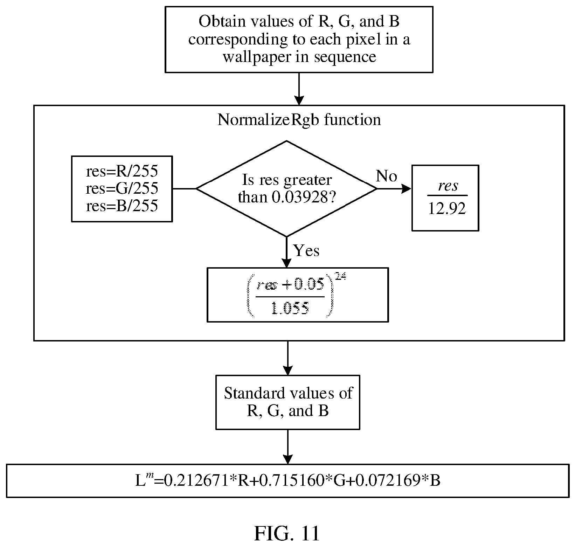

For example, an example in which the relative lightness of the wallpaper is represented by using a value obtained by performing normalization on the average lightness of the wallpaper. FIG. 11 is a diagram of a process of determining relative lightness of a wallpaper according to an embodiment of this application. As shown in FIG. 11, values of R, G, and B corresponding to pixels in the wallpaper are obtained in sequence, and normalization processing is first performed on the values of R, G, and B to obtain standard values of R, G, and B respectively. Optionally, a mobile phone may input values of R, G, and B into a NormalizeRgb function to perform normalization processing. Specifically, in the NormalizeRgb function, the values of R, G, and B are first divided by 255 separately, to scale the values of R, G, and B from 0 to 1. Then, in the NormalizeRgb function, it is determined whether a result res obtained by dividing the values of R, G, and B by 255 is greater than 0.03928. When the result res is greater than 0.03928, $\left(\frac{res + 0.05}{1.055}\right)^{2.4}$ is performed, which applies to a color in a high intensity range. Otherwise, when the result res is less than or equal to 0.03928, an operation $\frac{res}{12.92}$ is performed. The standard values of R, G, and B can be obtained by performing the operations described in the foregoing two cases.

Then, the mobile phone may substitute the standard values of R, G, and B corresponding to each pixel into Formula 15 described above to obtain the lightness corresponding to each pixel through solving. In this way, the mobile phone calculates the lightness corresponding to each pixel according to Formula 15, instead of obtaining the lightness corresponding to each pixel through calculation according to Formula 8. This can simplify a calculation process of obtaining the relative lightness of the wallpaper, and improve calculation efficiency. Certainly, in another implementation, the lightness corresponding to each pixel may alternatively be calculated according to Formula 8. Finally, the relative lightness of the wallpaper may be obtained by solving, based on the quantity of pixels included in the wallpaper, an average value of lightness corresponding to these pixels.

It may be understood that, in the process shown in FIG. 11, the values of R, G, and B corresponding to each pixel included in the wallpaper are all normalized for calculation. In another embodiment, alternatively, a dominant color of the wallpaper may be obtained first, and then normalization processing is performed on values of R, G, and B corresponding to the dominant color of the wallpaper. Standard values of R, G, and B that are normalized and that correspond to the dominant color are substituted into Formula 15 described above to obtain lightness corresponding to the dominant color. The relative lightness of the wallpaper is directly determined based on the lightness corresponding to the dominant color. For example, the relative lightness of the wallpaper may be the lightness corresponding to the dominant color. Similarly, the lightness corresponding to the dominant color may alternatively be obtained through calculation according to Formula 8, and the relative lightness of the wallpaper is determined based on the lightness corresponding to the dominant color.

Optionally, in this embodiment of this application, a value of R corresponding to the dominant color of the wallpaper may be an average value of values of R corresponding to all pixels included in the wallpaper. Values of G and B corresponding to the dominant color of the wallpaper are determined in a similar manner.

Certainly, in another embodiment, normalization processing shown in FIG. 11 may alternatively not be performed, and lightness corresponding to each pixel is directly solved based on values of R, G, and B of each pixel included in the wallpaper, so as to solve an average value of lightness corresponding to these pixels to obtain the relative lightness of the wallpaper.

In another embodiment, classification may alternatively be performed on the pattern type of the wallpaper based on the lightness of the wallpaper. For example, different lightness ranges are set. The wallpaper has different pattern types when the lightness of the wallpaper is in different lightness ranges. For example, an extreme pattern wallpaper corresponds to a first lightness range, an extremely light-color wallpaper corresponds to a second lightness range, a light-color wallpaper corresponds to a third lightness range, and so on.

The foregoing describes a wallpaper type and a manner of determining the wallpaper type. With reference to the foregoing wallpaper type, the following describes a process in which the mobile phone sets a display effect of a UI element on a wallpaper based on the wallpaper type.

Optionally, in this embodiment of this application, when setting the display effect of the UI element on the wallpaper, the mobile phone may set a parameter of the UI element, so that the UI element can achieve a corresponding display effect. The parameter of the UI element is used for determining the display effect of the UI element on the mobile phone. For example, the parameter of the UI element may include one or more of a color, lightness, shadow, a fuzzy radius, saturation, transparency, and the like.

In some embodiments, the mobile phone may set one or more parameters of the UI element based on one or more parameters of the wallpaper. For example, one or more parameters of the wallpaper may include at least one of lightness and a color. One or more parameters of the UI element may include at least one of lightness, a color, lightness, shadow, a fuzzy radius, saturation, and transparency.

In this embodiment, in a possible implementation, an example in which the parameter of the wallpaper includes the color, and the parameter of the UI element includes the color is used. A color of a UI element displayed on a wallpaper may be determined based on a color of the entire wallpaper. Specifically, a dominant color of the entire wallpaper may be determined based on the color of the entire wallpaper, and the color of the UI element is set based on the dominant color of the entire wallpaper. For example, the dominant color of the entire wallpaper may be directly set as the color of the UI element. In this way, a color tone of the entire wallpaper may be consistent with a color tone of the UI element, so that it is eye-pleasing. Certainly, in another embodiment, the color of the UI element may alternatively be determined based on a color of a wallpaper corresponding to the UI element. It may be understood that, in this embodiment of this application, the wallpaper corresponding to the UI element may be a partial area in which the UI element is located and that is on the entire wallpaper, and the area may cover a display position of the UI element on the entire wallpaper.

In another possible implementation, an example in which the parameter of the wallpaper includes the lightness, and the parameter of the UI element includes the lightness is used. Lightness of the UI element displayed on the wallpaper may be further determined based on lightness of the wallpaper corresponding to the UI element. Optionally, in this implementation, a lightness value of the UI element may be negatively correlated with a lightness value of the wallpaper corresponding to the UI element. Optionally, the lightness of the wallpaper corresponding to the UI element may be represented by using lightness of a dominant color of the wallpaper corresponding to the UI element, or may be represented by using average lightness of lightness of pixels included in the wallpaper corresponding to the UI element.

In this implementation, in some embodiments, lightness of the UI element may be set based on the lightness of the wallpaper corresponding to the UI element and the wallpaper type. In a possible implementation, when a pattern type of the wallpaper corresponding to the UI element satisfies a type 1, the mobile phone may darken lightness of the UI element. Optionally, in this embodiment of this application, that the mobile phone darkens lightness of the UI element may mean that the lightness of the UI element is set to be less than lightness of the wallpaper corresponding to the UI element. For example, the type 1 may include at least one of an extremely light-color wallpaper and a light-color wallpaper.

In a possible implementation, when a pattern type of the wallpaper corresponding to the UI element satisfies a type 1, the mobile phone may darken lightness of the UI element. Optionally, in this embodiment of this application, that the mobile phone darkens lightness of the UI element may mean that the lightness of the UI element is set to be less than lightness of the wallpaper corresponding to the UI element. For example, the type 1 may include at least one of an extremely light-color wallpaper and a light-color wallpaper.

In this implementation, in a specific embodiment, darkened lightness of the UI element may be determined based on a plurality of a preset lightness threshold 1, lightness of the wallpaper corresponding to the UI element, a lightness reference value, and the like. In this embodiment, the preset lightness threshold 1 may be determined based on a display effect of the UI element. For example, the preset lightness threshold 1 may be 70.

In this embodiment, in a possible implementation, the lightness reference value may be a preset value, in other words, the preset value is unrelated to the lightness of the wallpaper corresponding to the UI element. Similarly, in this implementation, the preset value may also be determined based on the display effect of the UI element. For example, the preset value may be 100. In this implementation, the darkened lightness of the UI element may be determined based on the preset lightness threshold 1, the lightness of the wallpaper corresponding to the UI element, and the lightness reference value. In a specific embodiment, the darkened lightness of the UI element may be a normalized value of a difference obtained by subtracting a difference 1 from the preset value. The difference 1 is a difference obtained by subtracting the preset lightness threshold 1 from the lightness of the wallpaper corresponding to the UI element. Certainly, in this embodiment of this application, normalization processing may alternatively not be performed on the lightness, or the darkened lightness of the UI element may be obtained by performing another operation. For example, if the preset lightness threshold 1 is 70, the preset value is 100, and the lightness of the wallpaper corresponding to the UI element is 90, the difference 1 is 20, and the darkened lightness of the UI element is a normalized value 0.8 of 80.

In another possible implementation, the lightness reference value may alternatively be the lightness of the wallpaper corresponding to the UI element. In this implementation, the darkened lightness of the UI element may be determined based on the preset lightness threshold 1 and the lightness of the wallpaper corresponding to the UI element. For example, the darkened lightness of the UI element may be a normalized value of a difference obtained by subtracting the preset lightness threshold 1 from the lightness of the wallpaper corresponding to the UI element.

In this embodiment, in another possible implementation, when the pattern type of the wallpaper corresponding to the UI element satisfies a type 2, the mobile phone may brighten the lightness of the UI element. Optionally, in this embodiment of this application, that the mobile phone brightens the lightness of the UI element may mean that the lightness of the UI element is set to be greater than lightness of the wallpaper of the UI element. For example, the type 2 may include at least one of a deep-color wallpaper, an extremely deep-color wallpaper, and a common-pattern wallpaper.

In this implementation, in a specific embodiment, the brightened lightness of the UI element may alternatively be determined based on a plurality of a preset lightness threshold 2, lightness of the wallpaper corresponding to the UI element, a lightness reference value, and the like. Similarly, in this embodiment, the preset lightness threshold 2 may also be determined based on a display effect of the UI element. For example, the preset lightness threshold 2 may be 100. For descriptions of the lightness reference value, refer to the foregoing corresponding descriptions.

An example in which the lightness reference value is a preset value is used. In this embodiment, in a possible implementation, the brightened lightness of the UI element may alternatively be determined based on the preset lightness threshold 2, the lightness of the wallpaper corresponding to the UI element, and the lightness reference value. In a specific embodiment, the brightened lightness of the UI element may be a normalized value of a sum of the preset value and a difference 2. Certainly, normalization processing may alternatively not be performed on the lightness, or the brightened lightness of the UI element may be obtained by performing another operation. The difference 2 is a difference obtained by subtracting the lightness of the wallpaper corresponding to the UI element from the preset lightness threshold 2. For example, if the preset lightness threshold 2 is 100, the preset value is 100, and the lightness of the wallpaper corresponding to the UI element is 30, the difference 2 is 70, and the brightened lightness of the UI element is a normalized value 1.7 of 170.

Optionally, the preset value used in the scenario in which the mobile phone darkens the UI element may be the same as or may be different from the preset value used in the scenario in which the mobile phone brightens the UI element. In the foregoing embodiments, an example in which the preset value is 100 is used.

Similarly, in another possible implementation, the lightness reference value may alternatively be the lightness of the wallpaper corresponding to the UI element. In this implementation, the brightened lightness of the UI element may alternatively be determined based on the preset lightness threshold 2 and the lightness of the wallpaper corresponding to the UI element. For example, the brightened lightness of the UI element may be a normalized value of a sum of the preset lightness threshold 2 and the lightness of the wallpaper corresponding to the UI element.

Optionally, the lightness of the wallpaper corresponding to the UI element may be represented by using average lightness of the wallpaper corresponding to the UI element. Optionally, a dominant color of the wallpaper corresponding to the UI element may be first determined, and the average lightness of the wallpaper corresponding to the UI element is obtained through calculation based on the dominant color of the wallpaper of the UI element with reference to Formula 8 described above and the like. Alternatively, a manner shown in FIG. 11 and the like may be used. First, lightness corresponding to each pixel included in the wallpaper corresponding to the UI element is determined, and then average lightness of the wallpaper corresponding to the UI element is obtained through calculation based on the lightness corresponding to each pixel and a quantity of pixels. Alternatively, an HSLuv library may be invoked to convert a color of the wallpaper corresponding to the UI element represented by using an RGB color space into being described by using an HSL color space, for example, a hue (Hue, H), saturation (Saturation, S), or lightness (Lightness, L), so as to obtain the lightness of the wallpaper corresponding to the UI element. For example, an RGB value of the dominant color of the wallpaper corresponding to the UI element may be converted into an HSL value, so as to obtain the average lightness of the wallpaper corresponding to the UI element.

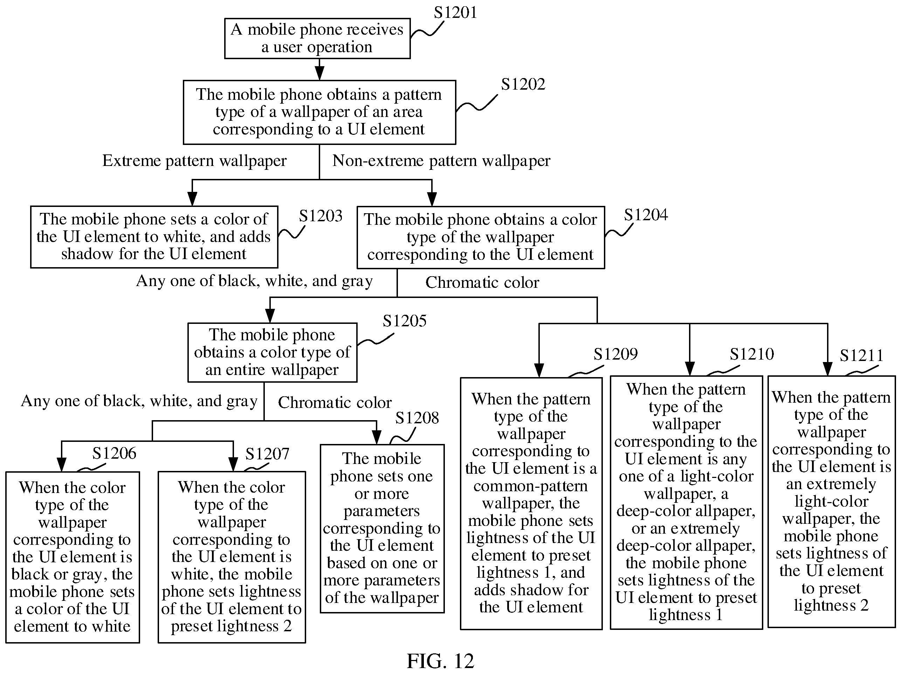

For example, FIG. 12 is a schematic flowchart of a UI element display method according to an embodiment of this application. An example in which a mobile phone performs the method is used. As shown in FIG. 12, the method includes the following steps.

S1201: The mobile phone receives a user operation.

The user operation is an operation for setting various wallpapers (for example, wallpapers on various UI interfaces such as a lock screen wallpaper and a desktop wallpaper) for the mobile phone. For example, the user operation may be a button operation, a gesture operation, a voice operation, or another type of operation.

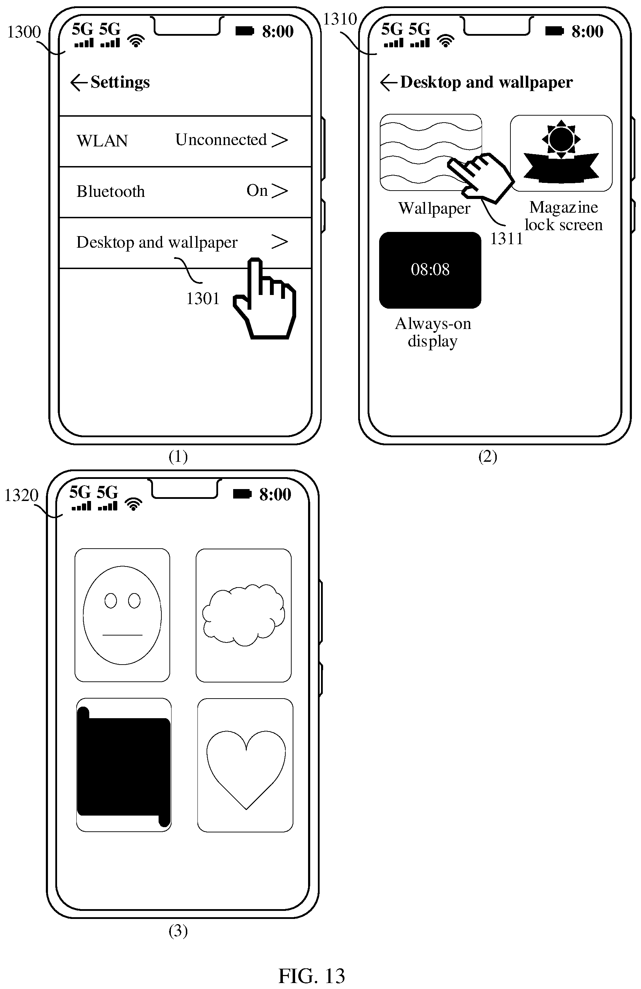

For example, FIG. 13 is a diagram of a scenario of setting a wallpaper for a mobile phone according to an embodiment of this application. As shown in FIG. 13, a user may perform the user operation by using an application that is installed on the mobile phone and that is used to set a wallpaper. For example, the application used to set a wallpaper is a settings application. As shown in (1) in FIG. 13, the mobile phone may display a running interface 1300 of the settings application. The running interface 1300 may include one or more options, and different options may be used to perform different setting operations. The one or more options include a desktop and wallpaper option 1301, and the desktop and wallpaper option 1301 may be used to set a wallpaper.

For example, the mobile phone detects a tap operation and the like performed by the user on the desktop and wallpaper option 1301, and in response to the operation, as shown in (2) in FIG. 13, the mobile phone may present a desktop and wallpaper interface 1310. The desktop and wallpaper interface 1310 includes one or more controls, such as a wallpaper control 1311, a magazine lock screen control, and a screen-off display control. The user may set the wallpaper by using the wallpaper control 1311, the magazine lock screen control, and the like. The wallpaper control 1311 is used as an example. The mobile phone detects a tap operation and the like performed by the user on the wallpaper control 1311, and in response to the operation, for example, an interface 1320 shown in (3) in FIG. 13, the mobile phone may present one or more wallpapers for the user to select. Optionally, the one or more wallpapers may include a wallpaper provided by a system, or may include a wallpaper customized by the user. The user may select any one of the wallpapers and set the wallpaper as one or more of the mobile phone desktop wallpaper and the lock screen wallpaper.

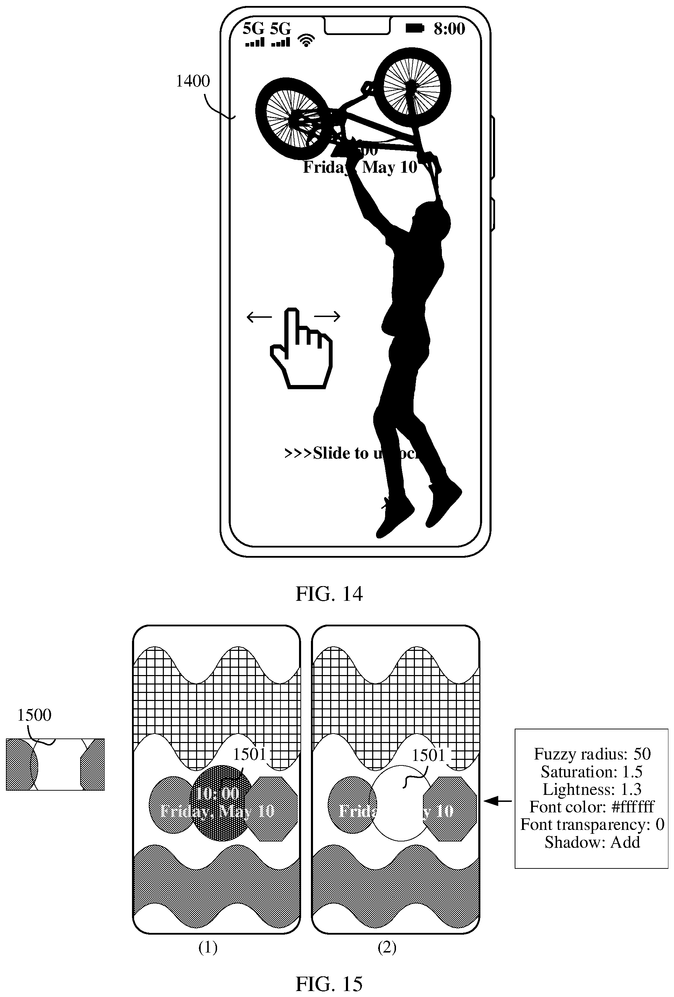

For example, FIG. 14 is a diagram of another scenario of setting a wallpaper for a mobile phone according to an embodiment of this application. In this example, the user may directly perform a wallpaper switching operation on an interface that presents a live wallpaper. The wallpaper switching operation is an operation of setting a wallpaper for the mobile phone. As shown in FIG. 14, the mobile phone may display a lock screen interface 1400, and a wallpaper applied to the lock screen interface 1400 is a live wallpaper. The user may perform a wallpaper switching operation such as sliding left or right on the lock screen interface 1400. In this case, in response to the operation of the user, the mobile phone may directly switch a specified lock screen wallpaper.

It may be understood that FIG. 13 and FIG. 14 show only two examples of setting the wallpaper for the mobile phone, and the wallpaper may alternatively be set in another manner. This is not limited in this embodiment of this application.

S1202: The mobile phone obtains a pattern type of a wallpaper of an area corresponding to the UI element.

For example, the mobile phone may determine, based on a size, a shape, a display position on a display, and the like of the UI element, the wallpaper of the area corresponding to the UI element (hereinafter briefly referred to as a wallpaper corresponding to the UI element). Optionally, the wallpaper (which may be referred to as a second wallpaper) corresponding to the UI element may be a partial area of the wallpaper set in step S1201. For example, if the UI element is clock text, as shown in FIG. 1, a wallpaper corresponding to the clock text may be a wallpaper of an area identified by a rectangular box 102.

Optionally, the pattern type of the wallpaper corresponding to the UI element may be determined by the mobile phone, or may be determined by another device and sent to the mobile phone. For an implementation of determining the pattern type of the wallpaper corresponding to the UI element, refer to the foregoing specific implementation of determining the pattern type of the wallpaper.

In a possible case, the pattern type of the wallpaper corresponding to the UI element may be an extreme pattern wallpaper. In this case, the mobile phone may perform step S1203.

S1203: The mobile phone sets a color of the UI element to white, and adds shadow for the UI element.

In another possible case, the pattern type of the wallpaper corresponding to the UI element may be a non-extreme pattern wallpaper, for example, may be specifically one of an extremely light-color wallpaper, a light-color wallpaper, a common-pattern wallpaper, a deep-color wallpaper, or an extremely deep-color wallpaper. In this case, the mobile phone may perform step S1204 and subsequent steps.

In this step, the mobile phone may further set lightness of the UI element to preset lightness 1. In this embodiment of this application, the preset lightness 1 may be a lightness value greater than reference lightness. For example, if the reference lightness is a normalized lightness value of 1, the preset lightness 1 may be 1.3 or the like. It may be understood that, in this embodiment of this application, a value of the preset lightness 1 and a value of the reference lightness may be both determined by a developer based on an actual display effect of the UI element.

In this way, the pattern type of the wallpaper corresponding to the UI element is determined, and in a scenario in which the pattern type of the wallpaper corresponding to the UI element is an extreme pattern wallpaper, for the UI element, colorization is directly performed, preset lightness is set, and so on, so that a needed rendering effect can be quickly obtained, thereby improving efficiency and saving resources.

S1204: The mobile phone obtains a color type of the wallpaper corresponding to the UI element.

In a possible implementation, the color type of the wallpaper corresponding to the UI element may be determined based on a dominant color of the wallpaper corresponding to the UI element, that is, the dominant color of the wallpaper corresponding to the UI element represents the color of the wallpaper corresponding to the UI element. Optionally, the dominant color of the wallpaper corresponding to the UI element may be represented by using an average value of RGB values of all pixels included in the wallpaper corresponding to the UI element.

Similarly, the operation of determining the color type of the wallpaper corresponding to the UI element may be performed by the mobile phone, or may be performed by another device, and then the mobile phone obtains, from the another device, the color type of the wallpaper corresponding to the UI element. For an implementation of determining the color type of the wallpaper corresponding to the UI element, refer to the foregoing specific implementation of determining the color type of the wallpaper.

In a possible case, the color type of the wallpaper corresponding to the UI element may be any one of black, white, and gray. In this case, the mobile phone may perform step S1205.

S1205: The mobile phone obtains a color type of the entire wallpaper.

It may be understood that the entire wallpaper (which may be referred to as a first wallpaper) may be the wallpaper set for the mobile phone by the user operation in step S1201.

In a possible implementation, the color type of the entire wallpaper may be determined based on a dominant color of the entire wallpaper. In other words, the dominant color of the entire wallpaper represents the color of the entire wallpaper. Optionally, the dominant color of the entire wallpaper may be represented by using an average value of RGB values of all pixels included in the entire wallpaper.

For other descriptions of step S 1205, refer to related descriptions of step S 1204.

In a possible case, the color type of the entire wallpaper may be any one of black, white, and gray. In this case, the mobile phone may perform step S 1206 and step S1207.

S1206: When the color type of the wallpaper corresponding to the UI element is black or gray, the mobile phone sets a color of the UI element to white.

In this step, the mobile phone may further set the UI element to preset lightness 1. For specific implementation, refer to the specific implementation of step S1203. Optionally, in this step, the mobile phone may not add shadow for the UI element.

It may be understood that in this embodiment of this application, an example in which the UI element is set to white (which may be used as an example of a preset value) is used. In another embodiment, another preset color may be set, for example, a color close to white.

S1207: When the color type of the wallpaper corresponding to the UI element is white, the mobile phone sets lightness of the UI element to preset lightness 2.

The preset lightness 2 is less than the preset lightness 1. In this embodiment of this application, the preset lightness 2 may be a lightness value less than the reference lightness. For example, if the reference lightness is still a normalized lightness value of 1, the preset lightness 2 may be 0.7, or the like. It may be understood that, in this embodiment of this application, a value of the preset lightness 2 may alternatively be determined by the developer based on an actual display effect of the UI element.

Optionally, in step S1207, the mobile phone may further set the color of the UI element to white. Optionally, in this step, the mobile phone may not add shadow for the UI element.

In another possible case, the color type of the entire wallpaper may be a chromatic color. In this case, the mobile phone may perform step S1208.

S1208: The mobile phone sets one or more parameters corresponding to the UI element based on one or more parameters of the wallpaper.

For example, the one or more parameters described in step S 1208 may include at least one of a color, lightness, and the like. For implementation of this step, refer to the foregoing implementation of setting one or more parameters of the UI element based on one or more parameters of the wallpaper.

Optionally, in step S1208, the mobile phone does not add shadow for the UI element.

In another possible case, the color type of the wallpaper corresponding to the UI element may be a chromatic color. In this case, the mobile phone may perform step S1209 to step S1211.

S1209: When the pattern type of the wallpaper corresponding to the UI element is a common-pattern wallpaper, the mobile phone sets lightness of the UI element to preset lightness 1, and adds shadow for the UI element.

S1210: When the pattern type of the wallpaper corresponding to the UI element is any one of a light-color wallpaper, a deep-color wallpaper, or an extremely deep-color wallpaper, the mobile phone sets lightness of the UI element to preset lightness 1.

Optionally, in step S1210, the mobile phone does not add shadow for the UI element.

In this way, an effect of the UI element is set with reference to the color type of the wallpaper corresponding to the UI element and the color type of the entire wallpaper. For example, when the color type of the entire wallpaper is a chromatic color, the effect of the UI element is directly set based on the color of the wallpaper. When the color type of the entire wallpaper is one of black, white, gray, and the like, second determining is performed based on the color type of the wallpaper corresponding to the UI element. Different settings are applied to different scenarios, a determining process is more refined, and a display effect of the UI element can be further improved.

S1211: When the pattern type of the wallpaper corresponding to the UI element is an extremely light-color wallpaper, the mobile phone sets lightness of the UI element to preset lightness 2.

Optionally, in step S1211, the mobile phone does not add shadow for the UI element.

Optionally, in step S1209 to step S1211, the mobile phone may alternatively set the color of the UI element to white.

It may be understood that the mobile phone may set a display effect of the UI element based on a plurality of conditions of the pattern type and the color type of the wallpaper of the area corresponding to the UI element, the pattern type and the color type of the entire wallpaper, and the like. An execution sequence of the foregoing conditions is not limited in this embodiment of this application. In FIG. 12, a sequence of first using the pattern type of the wallpaper of the area corresponding to the UI element, then using the color type of the wallpaper of the area corresponding to the UI element, and then using the color type of the entire wallpaper is used as an example.

Optionally, in the procedure shown in FIG. 12, in addition to setting a color, shadow, and lightness of the UI element, the mobile phone may further set one or more of transparency, a fuzzy radius, saturation, and the like of the UI element. For example, in the scenario described in step S1209, the mobile phone may set the fuzzy radius of the UI element to a first preset radius, for example, 50. For the scenario described in step S1211, the mobile phone may set the fuzzy radius of the UI element to a second preset radius, for example, 20. A specific specified range of the parameter may be determined by the developer based on a display effect of the UI element. This is not specifically limited in this embodiment of this application.

In this way, the UI element is rendered based on the color type and the pattern type of the wallpaper corresponding to the UI element. More factors are considered, and calculation is more refined. In addition, the color type of the wallpaper may reflect a depth of the color of the wallpaper, that is, an effect required for the UI element may be determined based on the depth of the color of the wallpaper, so that algorithm redundancy can be reduced, and a more accurate parameter setting for the UI element can be obtained. In this way, a display effect of the UI element is better, and a visual effect of the user is better.

Further, after completing the process shown in FIG. 12, the mobile phone may further display the wallpaper and the UI element located on the wallpaper.

The following uses an example in which the UI element is clock text and calendar text. FIG. 15 to FIG. 21 are some effect diagrams according to embodiments of this application. It may be understood that FIG. 15 to FIG. 21 are merely for ease of understanding a difference between a display effect of the clock text and calendar text and an existing effect after the technical solutions provided in embodiments of this application are applied. Paddings, patterns, and the like merely represent an effect of a wallpaper, and do not have a practical meaning.

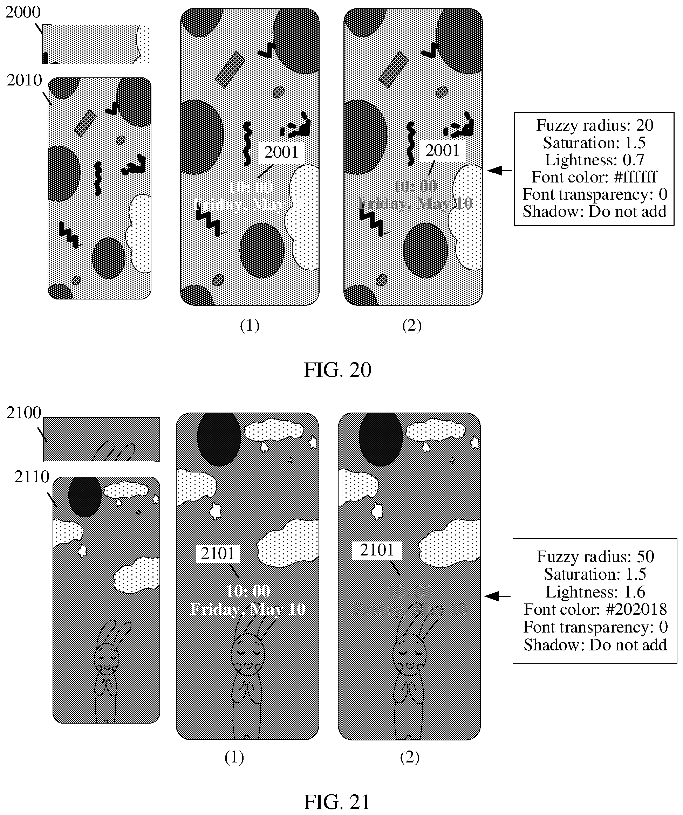

Optionally, all (2) in FIG. 15 to (2) in FIG. 21 may be used as examples of a first interface.

FIG. 15 is an effect diagram of clock text and calendar text in a scenario in which a pattern type of a wallpaper (for example, a wallpaper 1500) corresponding to the clock text and calendar text is an extreme pattern wallpaper. (1) in FIG. 15 is a diagram of an existing effect. The solution shown in FIG. 12 is performed. After a fuzzy radius of the clock text and calendar text 1501 is set to 50, saturation is set to 1.5, lightness is set to 1.3, a font color is set to white (which may be, for example, represented by using #ffffff), font transparency is set to 0, and shadow is added, (2) in FIG. 15 is an effect diagram according to an embodiment of this application.

It may be understood that, in this embodiment of this application, specified values of some parameters (such as a fuzzy radius, saturation, lightness, and transparency) of the clock text and calendar text shown in FIG. 15 to FIG. 21 are merely examples for description, and do not constitute a limitation on embodiments of this application.

It may be further understood that, in this embodiment of this application, an example in which display effects of clock text and calendar text are set at the same time is used. In another embodiment, the display effects of the clock text and the calendar text may be set separately.

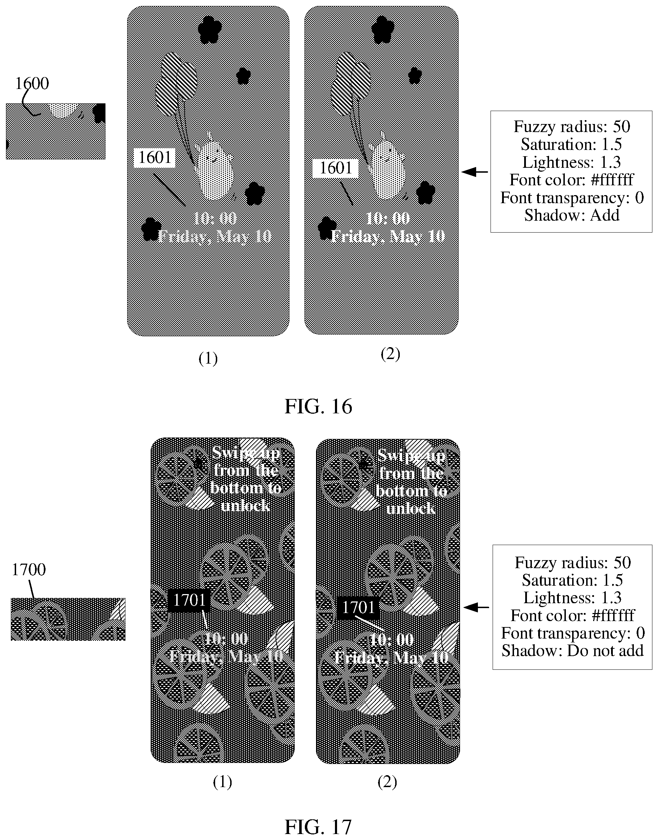

FIG. 16 is an effect diagram of clock text and calendar text in a scenario in which a color type of a wallpaper (for example, a wallpaper 1600) corresponding to the clock text and calendar text is a chromatic color, and a pattern type is a common-pattern wallpaper. (1) in FIG. 16 is a diagram of an existing effect. For example, assuming that a dominant color of the wallpaper 1600 is {"red": 40, "green": 32, "blue": 24, "alpha": 255}, according to Formula 13 described above, it is obtained through calculation that a color distance $\Delta E1$ between the dominant color of the wallpaper 1600 and black is 14.82049425368101, a color distance $\Delta E2$ between the dominant color of the wallpaper 1600 and white is 87.37830307317371, and a color distance $\Delta E3$ between the dominant color of the wallpaper 1600 and gray is 7.2548525481370305. Therefore, it may be determined that the color type of the wallpaper 1600 is a chromatic color. Similarly, it may be determined that the wallpaper 1600 is a common-pattern wallpaper by calculating a lightness variance and a light-color degree of the wallpaper 1600. Further, the solution shown in FIG. 12 is performed. After a fuzzy radius of clock text and calendar text 1601 is set to 50, saturation is set to 1.5, lightness is set to 1.3, a font color is set to white, font transparency is set to 0, and shadow is added, (2) in FIG. 16 is an effect diagram according to an embodiment of this application.

It may be understood that in this embodiment of this application, "red", "green", and "blue" respectively indicate values of R, G, and B corresponding to the colors in the RGB color space. A value of "alpha" indicates transparency.

FIG. 17 is an effect diagram of clock text and calendar text in a scenario in which a color of a wallpaper (for example, a wallpaper 1700) corresponding to the clock text and calendar text is a chromatic color, and a pattern type is an extremely deep-color wallpaper. (1) in FIG. 17 is a diagram of an existing effect. For example, assuming that a dominant color of the wallpaper 1700 is {"red": 24, "green": 32, "blue": 24, "alpha": 255}, according to Formula 13 described above, it is obtained through calculation that a color distance $\Delta E1$ between the dominant color of the wallpaper 1700 and black is 13.303081712236756, a color distance $\Delta E2$ between the dominant color of the wallpaper 1700 and white is 89.05892918934688, and a color distance $\Delta E3$ between the dominant color of the wallpaper 1700 and gray is 7.135654958011681. Therefore, it may be determined that a color type of the wallpaper 1700 is a chromatic color. Similarly, it may be determined that the wallpaper 1700 is an extremely deep-color wallpaper by calculating a lightness variance and a light-color degree of the wallpaper 1700. Further, the solution shown in FIG. 12 is performed. After a fuzzy radius of clock text and calendar text 1701 is set to 50, saturation is set to 1.5, lightness is set to 1.3, a font color is set to white, font transparency is set to 0, and shadow is not added, (2) in FIG. 17 is an effect diagram according to an embodiment of this application.

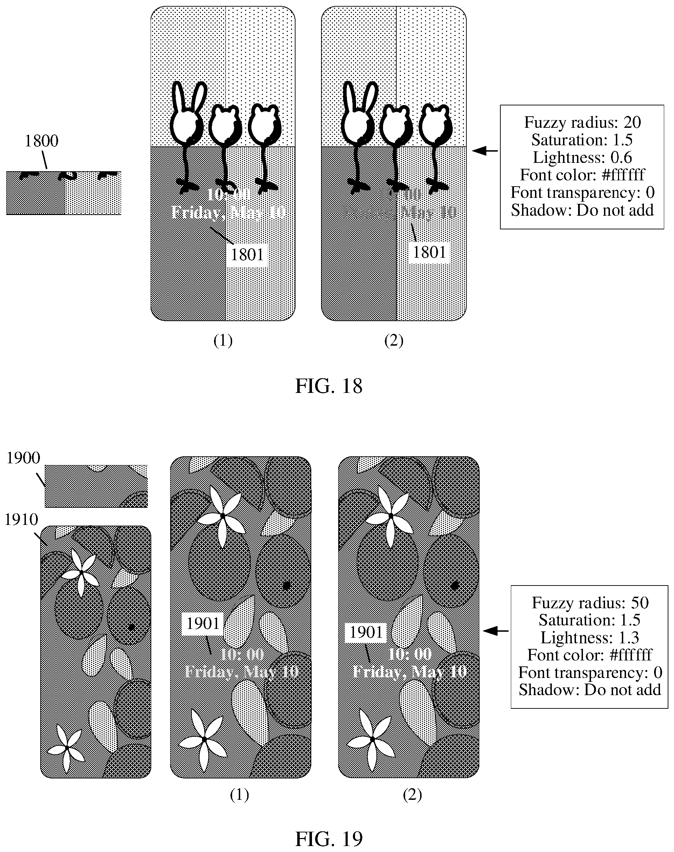

FIG. 18 is an effect diagram of clock text and calendar text in a scenario in which a color of a wallpaper (for example, a wallpaper 1800) corresponding to the clock text and calendar text is a chromatic color, and a pattern type is an extremely light-color wallpaper. (1) in FIG. 18 is a diagram of an existing effect. For example, assuming that a dominant color of the wallpaper 1800 is {"red": 200, "green": 216, "blue": 232, "alpha": 255}, according to Formula 13 described above, it is obtained through calculation that a color distance $\Delta E1$ between the dominant color of the wallpaper 1800 and black is 86.18494105155094, a color distance $\Delta E2$ between the dominant color of the wallpaper 1800 and white is 17.471189652988212, and a color distance $\Delta E3$ between the dominant color of the wallpaper 1800 and gray is 9.912463292814712. Therefore, it may be determined that a color type of the wallpaper 1800 is a chromatic color. Similarly, it may be determined that the wallpaper 1800 is an extremely light-color wallpaper by calculating a lightness variance and a light-color degree of the wallpaper 1800. Further, the solution shown in FIG. 12 is performed. After a fuzzy radius of clock text and calendar text 1801 is set to 20, saturation is set to 1.5, lightness is set to 0.6, a font color is set to white, font transparency is set to 0, and shadow is not added, (2) in FIG. 18 is an effect diagram according to an embodiment of this application. It may be understood that, in FIG. 15 to FIG. 20, although an example in which the color of the clock text and calendar text is white is used, a presented effect may be different due to impact of shadow, lightness, or another parameter.

FIG. 19 is an effect diagram of clock text and calendar text in a scenario in which a pattern type of a wallpaper (for example, a wallpaper 1900) corresponding to the clock text and calendar text is a deep-color wallpaper, a color type of the wallpaper corresponding to the clock text and calendar text is black, and a color type of an entire wallpaper (for example, a wallpaper 1910) is also black. (1) in FIG. 19 is a diagram of an existing effect. For example, assuming that a dominant color of the wallpaper 1900 is {"red": 16, "green": 16, "blue": 16, "alpha": 255}, according to Formula 13 described above, it is obtained through calculation that a color distance $\Delta E1$ between the dominant color of the wallpaper 1900 and black is 4.680445234629055, a color distance $\Delta E2$ between the dominant color of the wallpaper 1900 and white is 95.31955476537146, and a color distance $\Delta E3$ between the dominant color of the wallpaper 1900 and gray is 0.00002172841958421875. Because $\Delta E1$ is satisfied first, it may be determined that the color type of the wallpaper 1900 is black.

Assuming that a dominant color of the wallpaper 1910 is { "red": 24, "green": 16, "blue": 24, "alpha": 255}, according to Formula 13 described above, it is obtained through calculation that a color distance $\Delta E1$ between the dominant color of the wallpaper 1910 and black is 8.577264915338299, a color distance $\Delta E2$ between the dominant color of the wallpaper 1910 and white is 94.52026763212658, and a color distance $\Delta E3$ between the dominant color of the wallpaper 1910 and gray is 6.411600698450731. Therefore, it may be determined that the color type of the wallpaper 1910 is also black. Similarly, it may be determined that the wallpaper 1900 is a deep-color wallpaper by calculating a lightness variance and a light-color degree of the wallpaper 1900. Further, the solution shown in FIG. 12 is performed. After a fuzzy radius of clock text and calendar text 1901 is set to 50, saturation is set to 1.5, lightness is set to 1.3, a font color is set to white, font transparency is set to 0, and shadow is not added, (2) in FIG. 19 is an effect diagram according to an embodiment of this application.

FIG. 20 is an effect diagram of clock text and calendar text in a scenario in which a pattern type of a wallpaper (for example, a wallpaper 2000) corresponding to the clock text and calendar text is an extremely light-color wallpaper, a color type of the wallpaper corresponding to the clock text and calendar text is white, and a color type of an entire wallpaper (for example, a wallpaper 2010) is also white. (1) in FIG. 20 is a diagram of an existing effect. For example, assuming that a dominant color of the wallpaper 2000 is {"red": 240, "green": 240, "blue": 240, "alpha": 255}, according to Formula 13 described above, it is obtained through calculation that a color distance $\Delta E1$ between the dominant color of the wallpaper 2000 and black is 94.79624952280146, a color distance $\Delta E2$ between the dominant color of the wallpaper 2000 and white is 5.203750477228334, and a color distance $\Delta E3$ between the dominant color of the wallpaper 2000 and gray is 0.00001714528801951778784. Because $\Delta E2$ is satisfied first, it may be determined that the color type of the wallpaper 2000 is white.

Assuming that a dominant color of the wallpaper 2010 is {"red": 240, "green": 240, "blue": 240, "alpha": 255}, according to Formula 13 described above, it is obtained through calculation that a color distance $\Delta E1$ between the

dominant color of the wallpaper 2010 and black is 94.79624952280146, a color distance ∆E2 between the dominant color of the wallpaper 2010 and white is 5.203750477228334, and a color distance ∆E3 between the dominant color of the wallpaper 2010 and gray is 0.000017145288019517784. Because ∆E2 is satisfied first, it may be determined that the color type of the wallpaper 2010 is also white. Similarly, it may be determined that the wallpaper 2000 is an extremely light-color wallpaper by calculating a lightness variance and a light-color degree of the wallpaper 2000. Further, the solution shown in FIG. 12 is performed. After a fuzzy radius of clock text and calendar text 2001 is set to 20, saturation is set to 1.5, lightness is set to 0.7, a font color is set to white, font transparency is set to 0, and shadow is not added, (2) in FIG. 20 is an effect diagram according to an embodiment of this application.

FIG. 21 is an effect diagram of clock text and calendar text in a scenario in which a pattern type of a wallpaper (for example, a wallpaper 2100) corresponding to the clock text and calendar text is a common-pattern wallpaper, a color type of the wallpaper corresponding to the clock text and calendar text is gray, and a color type of an entire wallpaper (for example, a wallpaper 2110) is a chromatic color. (1) in FIG. 21 is a diagram of an existing effect. For example, assuming that a dominant color of the wallpaper 2100 is { "red": 32, "green": 32, "blue": 32, "alpha": 255}, according to Formula 13 described above, it is obtained through calculation that a color distance ∆E1 between the dominant color of the wallpaper 2100 and black is 12.250031043191246, a color distance ∆E2 between the dominant color of the wallpaper 2100 and white is 87.74996895680965, and a color distance ∆E3 between the dominant color of the wallpaper 2100 and gray is 0.000004371582263659266. Therefore, it may be determined that the color type of the wallpaper 2100 is gray.

Assuming that a dominant color of the wallpaper 2110 is {"red": 32, "green": 32, "blue": 24, "alpha": 255}, according to Formula 13 described above, it is obtained through calculation that a color distance ∆E1 between the dominant color of the wallpaper 2110 and black is 13.305727592484635, a color distance ∆E2 between the dominant color of the wallpaper 2110 and white is 88.1898784747354, and a color distance ∆E3 between the dominant color of the wallpaper 2110 and gray is 5.752552125000557. Therefore, it may be determined that the color type of the wallpaper 2110 is a chromatic color. Similarly, it may be determined that the wallpaper 2100 is a common-pattern wallpaper by calculating a lightness variance and a light-color degree of the wallpaper 2100. Further, step S1208 shown in FIG. 12 is performed, and the dominant color of the wallpaper 2110 is used as a color of clock text and calendar text 2101. Then, an HSL value of the dominant color of the wallpaper 2100 may be obtained by invoking an HSLuv library, for example, {"hsLuvH": "53.7", "hsLuvS": "35.0", "hsLuvL": "36.2"}. It may be understood that in this embodiment of this application, "hsLuvH", "hsLuvS", and "hsLuvL" respectively represent values of H, S, and L corresponding to an HSL color space.

Further, it may be obtained that lightness of the wallpaper 2100 is 36.2. Because the pattern type of the wallpaper 2100 is a common-pattern wallpaper, satisfying the foregoing type 2, lightness of the clock text and calendar text 2101 is brightened. For example, a difference between 36.2 and the preset lightness threshold 2 (where 100 is used as an example) is 63.8. Therefore, the lightness reference value (where an example in which a preset value is 100 is used) is increased by 63.8, and the lightness of the clock text and calendar text 2101 may be obtained as 1.6 through normalization. Further, after a fuzzy radius of the clock text and calendar text 2101 is set to 50, saturation is set to 1.5, lightness is set to 1.6, a font color is set to #202018, font transparency is set to 0, and shadow is not added, (2) in FIG. 21 is an effect diagram according to an embodiment of this application.

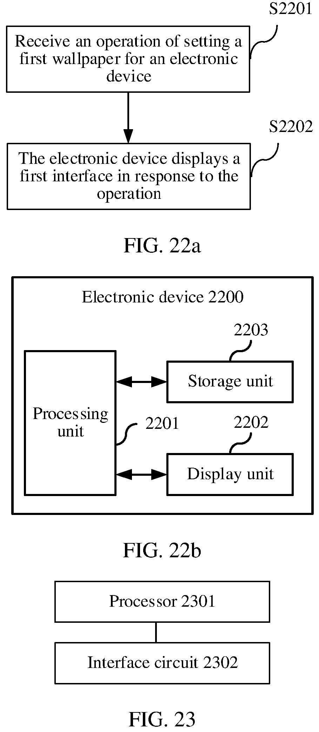

For example, FIG. 22a is a schematic flowchart of another UI element display method according to an embodiment of this application. The method may be applied to an electronic device having a display. As shown in FIG. 22a, the method includes the following steps.

S2201: Receive an operation of setting a first wallpaper for the electronic device.

For example, the operation may be a button operation, a gesture operation, a voice operation, or another type of operation. For descriptions of the operation, refer to related descriptions of step S1201 shown in FIG. 12.

S2202: The electronic device displays a first interface in response to the operation.

The first interface includes a first wallpaper and a UI element displayed on the first wallpaper. A value of a display parameter of the UI element corresponds to at least one of a wallpaper type of the first wallpaper and a wallpaper type of a second wallpaper. A display effect of the UI element on the electronic device is determined depending on the value of the display parameter of the UI element. The second wallpaper is an area in which the UI element is located and that is on the first wallpaper. The wallpaper type is obtained based on at least one of lightness and a color of a wallpaper.

In some embodiments, the wallpaper type includes at least one of a color type and a pattern type. The color type is obtained based on a color of a wallpaper. The color type includes a preset standard color and a non-standard color. Optionally, the color type may be determined based on a closeness degree between a color of a wallpaper and the standard color. For example, when the closeness degree between the color of the wallpaper and the standard color satisfies a preset condition, a color type of the wallpaper is a standard color. Alternatively, when the closeness degree between the color of the wallpaper and the standard color does not satisfy a preset condition, a color type of the wallpaper is a non-standard color. In some embodiments, the closeness degree between the color of the wallpaper and the standard color is represented by using a Euclidean distance between the color of the wallpaper and the standard color, and both the standard color and the color of the wallpaper are described by using a Lab color space. For specific implementation, refer to the foregoing descriptions.

The pattern type may be obtained based on the lightness of the wallpaper. For descriptions of the pattern type and implementation of determining the pattern type, refer to the foregoing descriptions.

In some embodiments, before performing step S2202 shown in FIG. 22a, the electronic device may further obtain a pattern type of the second wallpaper, and obtain a color type of the second wallpaper when the pattern type of the second wallpaper is a non-extreme pattern wallpaper.

In some embodiments, after obtaining the color type of the second wallpaper, when the color type of the second wallpaper is a standard color, the electronic device may further obtain a color type of the first wallpaper, and set the value of the display parameter of the UI element based on the color type of the first wallpaper and the color type of the second wallpaper.

In some embodiments, the display parameter of the UI element includes lightness. Before performing step S2202 shown in FIG. 22a, the electronic device may further obtain a value of lightness of the second wallpaper, and set a value of lightness of the UI element based on the value of the lightness of the second wallpaper. Alternatively, the display parameter of the UI element includes a color. Before performing step S2202 shown in FIG. 22a, the electronic device may further obtain a value of a color of the first wallpaper, and set a value of a color of the UI element based on the value of the color of the first wallpaper.

The foregoing mainly describes the solutions provided in embodiments of this application from the perspective of the method. It may be understood that to implement the foregoing functions, the electronic device includes a corresponding hardware structure and/or software module for performing each of the functions. With reference to the units and algorithm steps described in embodiments disclosed in this application, embodiments of this application can be implemented in a form of hardware or hardware and computer software. Whether a function is performed by hardware or hardware driven by a computer depends on particular applications and design constraint conditions of the technical solutions. A person skilled in the art may use different methods to implement the described functions for each particular application, but it should not be considered that the implementation goes outside the scope of the technical solutions in embodiments of this application.

In embodiments of this application, the electronic device may be divided into functional modules based on the foregoing method examples. For example, each functional module may be obtained through division for a corresponding function, or two or more functions may be integrated into one processing unit. The integrated unit may be implemented in the form of hardware, or may be implemented in a form of a software functional module. It should be noted that, in this embodiment of this application, division into the units is an example, and is merely a logical function division. In actual implementation, another division manner may be used.

FIG. 22b is a diagram of a structure of an electronic device according to an embodiment of this application. The electronic device 2200 may be configured to implement the methods recorded in the foregoing method embodiments. For example, the electronic device 2200 may specifically include a processing unit 2201 and a display unit 2202.

The processing unit 2201 is configured to support the electronic device 2200 in performing the processing function in any one of FIG. 1 to FIG. 22a.

The display unit 2202 is configured to support the electronic device 2200 in performing the display function in any one of FIG. 1 to FIG. 22a.

Optionally, the electronic device 2200 shown in FIG. 22b may further include a communication unit (not shown in FIG. 22b). The communication unit is configured to support the electronic device 2200 in performing steps of communication between the electronic device and another electronic device in embodiments of this application.

Optionally, the electronic device 2200 shown in FIG. 22b may further include a storage unit 2203, and the storage unit 2203 stores a program or instructions. When the processing unit 2201 executes the program or the instructions, the electronic device 2200 shown in FIG. 22b is caused to perform the method in the foregoing method embodiments.

For technical effect of the electronic device 2200 shown in FIG. 22b, refer to the technical effects of the method in the foregoing method embodiments. Details are not described herein again. The processing unit 2201 in the electronic device 2200 shown in FIG. 22b may be implemented by a processor or a processor-related circuit component, and may be a processor or a processing module. The communication unit may be implemented by a transceiver or a transceiver-related circuit component, and may be a transceiver or a transceiver module. The display unit 2202 may be implemented by a display-related component.

An embodiment of this application further provides a chip system. As shown in FIG. 23, the chip system includes at least one processor 2301 and at least one interface circuit 2302. The processor 2301 may be interconnected to the interface circuit 2302 through a line. For example, the interface circuit 2302 may be configured to receive a signal from another apparatus. For another example, the interface circuit 2302 may be configured to send a signal to another apparatus (for example, the processor 2301). For example, the interface circuit 2302 may read instructions stored in the memory and send the instructions to the processor 2301. When the instructions are executed by the processor 2301, the electronic device may be caused to perform the steps performed by the electronic device in the foregoing embodiments. Certainly, the chip system may further include another discrete component. This is not specifically limited in embodiments of this application.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processing circuit (digital signal processor, DSP), a microcontroller unit (microcontroller unit, MCU), a programmable controller (programmable logic device, PLD), or another integrated chip.

It should be understood that the steps in the foregoing method embodiments may be completed by using an integrated logic circuit of hardware in the processor or instructions in the form of software. The steps of the method disclosed with reference to embodiments of this application may be directly performed by a hardware processor, or may be performed through a combination of hardware in the processor and a software module.

An embodiment of this application further provides a computer storage medium. The computer storage medium stores computer instructions. When the computer instructions are run on an electronic device, the electronic device is caused to perform the method in the foregoing method embodiments.

An embodiment of this application provides a computer program product. The computer program product includes a computer program or instructions. When the computer program or the instructions are run on a computer, the computer is caused to perform the method in the foregoing method embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to cause the apparatus to perform the method in the foregoing method embodiments.

The electronic device, the computer storage medium, the computer program product, or the chip provided in embodiments is configured to perform the corresponding method provided above. Therefore, for beneficial effects that can be achieved by the electronic device, the computer storage medium, the computer program product, or the chip, refer to the beneficial effects of the corresponding method provided above. Details are not described herein.

Based on the descriptions about the foregoing implementations, a person skilled in the art may understand that, for a purpose of convenient and brief description, division into the foregoing functional modules is used as an example for illustration. In actual application, the foregoing functions may be allocated to different functional modules and implemented based on requirements. In other words, an inner structure of an apparatus is divided into different functional modules to implement all or some of the functions described above.

In the several embodiments provided in this application, it should be understood that the disclosed apparatus and method may be implemented in other manners. Embodiments may be combined or referenced with each other without conflict. The described apparatus embodiment is merely an example. For example, division into the modules or the units is merely logical function division. In actual implementation, another division manner may be used. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on a plurality of different places. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in the form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The storage medium includes various media that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

**Claims**

1. A UI element display method, applied to an electronic device having a display, wherein the method comprises:
   displaying a first interface in response to an operation of setting a first wallpaper for the electronic device, wherein the first interface comprises the first wallpaper and a UI element displayed on the first wallpaper, a value of a display parameter of the UI element corresponds to at least one of a wallpaper type of the first wallpaper or a wallpaper type of a second wallpaper, the second wallpaper is an area in which the UI element is located and that is on the first wallpaper, and the wallpaper type is obtained based on at least one of lightness and a color of a wallpaper.

2. The method according to claim 1, wherein the wallpaper type comprises at least one of a color type and a pattern type, the color type is obtained based on a color of a wallpaper, the color type comprises a preset standard color and a non-standard color, the pattern type is obtained based on lightness of a wallpaper, the pattern type comprises an extreme pattern wallpaper and a non-extreme pattern wallpaper, and the non-extreme pattern wallpaper comprises at least one of an extremely light-color wallpaper, a light-color wallpaper, a common-pattern wallpaper, a deep-color wallpaper, and an extremely deep-color wallpaper.

3. The method according to claim 2, wherein the color type is determined based on a closeness degree between a color of a wallpaper and the standard color.

4. The method according to claim 3, wherein

   when the closeness degree between the color of the wallpaper and the standard color satisfies a preset condition, a color type of the wallpaper is a standard color; or
   when the closeness degree between the color of the wallpaper and the standard color does not satisfy a preset condition, a color type of the wallpaper is a non-standard color.

5. The method according to claim 3 or 4, wherein the closeness degree between the color of the wallpaper and the standard color is represented by using a Euclidean distance between the color of the wallpaper and the standard color, and both the standard color and the color of the wallpaper are described by using a Lab color space.

6. The method according to claim 2, wherein the pattern type is determined based on at least one of a lightness variance of a wallpaper and a light-color degree of the wallpaper, the lightness variance of the wallpaper represents a dispersion degree of lightness of each pixel comprised in the wallpaper, and the light-color degree of the wallpaper is represented by a contrast between lightness of the wallpaper and lightness of a reference color.

7. The method according to any one of claims 2 to 6, wherein before the displaying the first interface, the method further comprises:

   obtaining a pattern type of the second wallpaper; and
   obtaining a color type of the second wallpaper when the pattern type of the second wallpaper is a non-extreme pattern wallpaper.

8. The method according to claim 7, wherein after the obtaining the color type of the second wallpaper, the method further comprises:

   obtaining a color type of the first wallpaper when the color type of the second wallpaper is a standard color; and
   setting the value of the display parameter of the UI element based on the color type of the first wallpaper and the color type of the second wallpaper.

9. The method according to any one of claims 1 to 8, wherein the UI element comprises one or more of clock text, calendar text, an application icon, a name corresponding to the application icon, a lock screen widget, a lock screen application notification bar, a status bar, a signal indicator, and a battery level indicator; and the display parameter of the UI element comprises one or more of lightness, a color, shadow, a fuzzy radius, saturation, and transparency.

10. The method according to claim 9, wherein

the display parameter of the UI element comprises the lightness; and before the displaying the first interface, the method further comprises: obtaining a value of lightness of the second wallpaper; and setting a value of lightness of the UI element based on the value of the lightness of the second wallpaper; or
the display parameter of the UI element comprises the color, and before the displaying the first interface, the method further comprises: obtaining a value of a color of the first wallpaper; and setting a value of a color of the UI element based on the value of the color of the first wallpaper.

11. The method according to claim 10, wherein the value of the color of the UI element is the same as the value of the color of the first wallpaper.

12. The method according to any one of claims 2 to 11, wherein the standard color comprises black, white, and gray, and the display parameter of the UI element comprises the lightness; and

when the pattern type of the second wallpaper is an extreme pattern wallpaper, or when the pattern type of the second wallpaper is one of a common-pattern wallpaper, a light-color wallpaper, a deep-color wallpaper, and an extremely deep-color wallpaper, and the color type is a non-standard color, or when the color type of the second wallpaper is one of black and gray, the pattern type is a non-extreme pattern wallpaper, and the color type of the first wallpaper is a standard color, the value of the lightness of the UI element is a first value; or
when the pattern type of the second wallpaper is an extremely light-color wallpaper, and the color type is a non-standard color, or when the color type of the second wallpaper is white, the pattern type is a non-extreme pattern wallpaper, and the color type of the first wallpaper is a standard color, the value of the lightness of the UI element is a second value, wherein
the first value is greater than the second value.

13. The method according to any one of claims 2 to 12, wherein the display parameter of the UI element comprises the lightness; and

when the color type of the second wallpaper is a standard color, the pattern type is a first type, and the color type of the first wallpaper is a non-standard color, the value of the lightness of the UI element is greater than the value of the lightness of the second wallpaper; or
when the color type of the second wallpaper is a standard color, the pattern type is a second type, and the color type of the first wallpaper is a non-standard color, a value of the UI element is less than the value of the lightness of the second wallpaper, wherein
the first type comprises one or more of a common-pattern wallpaper, a deep-color wallpaper, and an extremely deep-color wallpaper, and the second type comprises one or more of an extremely light-color type and a light-color type.

14. The method according to any one of claims 2 to 13, wherein the display parameter of the UI element comprises the color; and

when the pattern type of the second wallpaper is an extreme pattern wallpaper, or when the pattern type of the second wallpaper is a non-extreme pattern wallpaper, and the color type is a non-standard color, or when the pattern type of the second wallpaper is a non-extreme pattern wallpaper, the color type is a standard color, and the color type of the first wallpaper is a standard color, the value of the color of the UI element is a preset value; or
when the color type of the second wallpaper is a standard color, the pattern type is a non-extreme pattern wallpaper, and the color type of the first wallpaper is a non-standard color, the value of the color of the UI element is the same as the value of the color of the first wallpaper.

15. The method according to any one of claims 2 to 14, wherein the display parameter of the UI element comprises the shadow; and
when the pattern type of the second wallpaper is an extreme pattern wallpaper, or when the pattern type of the second wallpaper is a common-pattern wallpaper, and the color type is a non-standard color, the shadow is added for the UI element.

16. An electronic device, comprising a display, a processor, and a memory, wherein the display and the memory are coupled to the processor, the memory is configured to store program code, the program code comprises instructions, the processor reads the instructions from the memory, and the electronic device is caused to perform the method according to any one of claims 1 to 15.

17. A computer-readable storage medium, wherein the computer-readable storage medium comprises a computer program, and when the computer program is run on an electronic device, the electronic device is caused to perform the method according to any one of claims 1 to 15.

18. A computer program product, wherein the computer program product comprises a computer program or instructions, and when the computer program or the instructions are run on a computer, the computer is caused to perform the method according to any one of claims 1 to 15.

FIG. 1

FIG. 2

| Dominant color tone of a wallpaper | | Transparency of an application icon |
|---|---|---|

Adjust a color of the application icon

FIG. 3

FIG. 4(1)

FIG. 4(2)

FIG. 4(3)

Electronic device 500

Displays 1 to N [530] — Processor [510] — Memory [520]

FIG. 5

FIG. 6

FIG. 7

FIG. 8

Obtain a color of a wallpaper described by using a Lab color space ⟿ S901

Determine whether a color distance between the color of the wallpaper and black is less than a first threshold —S902

Yes→ Determine that a color type of the wallpaper is black ⟿ S903

No

Determine whether a color distance between the color of the wallpaper and white is less than a second threshold —S904

Yes→ Determine that a color type of the wallpaper is white ⟿ S905

No

Determine whether a color distance between the color of the wallpaper and gray is less than a third threshold —S906

Yes→ Determine that a color type of the wallpaper is gray ⟿ S907

No

Determine that a color type of the wallpaper is a chromatic color ⟿ S908

FIG. 9

FIG. 10

Obtain values of R, G, and B
corresponding to each pixel in a
wallpaper in sequence

NormalizeRgb function

res=R/255
res=G/255
res=B/255

Is res greater
than 0.03928?

No

$\dfrac{res}{12.92}$

Yes

$$\left(\dfrac{res+0.05}{1.055}\right)^{2.4}$$

Standard values of
R, G, and B

$L^{m}=0.212671*R+0.715160*G+0.072169*B$

FIG. 11

EP 4 776 606 A1

S1201

A mobile phone receives
a user operation

S1202

The mobile phone obtains a pattern
type of a wallpaper of an area
corresponding to a UI element

Extreme pattern wallpaper    Non-extreme pattern wallpaper

S1203

The mobile phone sets a color of
the UI element to white, and adds
shadow for the UI element

S1204

The mobile phone obtains a color
type of the wallpaper
corresponding to the UI element

Any one of black, white, and gray    Chromatic color

S1205

The mobile phone
obtains a color type of
an entire wallpaper

Any one of black, white, and gray    Chromatic color

S1208

S1206

When the color
type of the
wallpaper
corresponding to
the UI element is
black or gray, the
mobile phone sets
a color of the UI
element to white

S1207

When the color
type of the
wallpaper
corresponding to
the UI element is
white, the mobile
phone sets lightness
of the UI element to
preset lightness 2

The mobile
phone sets one
or more
parameters
corresponding to
the UI element
based on one or
more parameters
of the wallpaper

S1209

When the pattern
type of the
wallpaper
corresponding to
the UI element is a
common-pattern
wallpaper, the
mobile phone sets
lightness of the UI
element to preset
lightness 1, and
adds shadow for
the UI element

S1210

When the pattern
type of the
wallpaper
corresponding to the
UI element is any
one of a light-color
wallpaper, a
deep-color allpaper,
or an extremely
deep-color allpaper,
the mobile phone
sets lightness of the
UI element to preset
lightness 1

S1211

When the pattern
type of the
wallpaper
corresponding to
the UI element is
an extremely
light-color
wallpaper, the
mobile phone
sets lightness of
the UI element
to preset
lightness 2

FIG. 12

(1)

(2)

(3)

FIG. 13

FIG. 14

Fuzzy radius: 50
Saturation: 1.5
Lightness: 1.3
Font color: #ffffff
Font transparency: 0
Shadow: Add

FIG. 15

1600

1601

1601

Fuzzy radius: 50
Saturation: 1.5
Lightness: 1.3
Font color: #ffffff
Font transparency: 0
Shadow: Add

10: 00
Friday, May 10

10: 00
Friday, May 10

(1)

(2)

FIG. 16

1700

Swipe up from the bottom to unlock

Swipe up from the bottom to unlock

1701

1701

Fuzzy radius: 50
Saturation: 1.5
Lightness: 1.3
Font color: #ffffff
Font transparency: 0
Shadow: Do not add

10: 00
Friday, May 10

10: 00
Friday, May 10

(1)

(2)

FIG. 17

1800

1801

1801

Fuzzy radius: 20
Saturation: 1.5
Lightness: 0.6
Font color: #ffffff
Font transparency: 0
Shadow: Do not add

(1)                    (2)

FIG. 18

1900

1910

1901

1901

Fuzzy radius: 50
Saturation: 1.5
Lightness: 1.3
Font color: #ffffff
Font transparency: 0
Shadow: Do not add

(1)                    (2)

FIG. 19

FIG. 20

FIG. 21

S2201

Receive an operation of setting a
first wallpaper for an electronic
device

S2202

The electronic device displays a
first interface in response to the
operation

FIG. 22a

Electronic device 2200

2203

Processing
unit

Storage unit

2201          2202

Display unit

FIG. 22b

Processor 2301

Interface circuit 2302

FIG. 23

## INTERNATIONAL SEARCH REPORT

| | International application No. |
|---|---|
| | **PCT/CN2024/139631** |

**A.     CLASSIFICATION OF SUBJECT MATTER**

H04M 1/72427(2021.01)i

According to International Patent Classification (IPC) or to both national classification and IPC

**B.     FIELDS SEARCHED**

Minimum documentation searched (classification system followed by classification symbols)

IPC:H04M

Documentation searched other than minimum documentation to the extent that such documents are included in the fields searched

Electronic data base consulted during the international search (name of data base and, where practicable, search terms used)

CNTXT; WOTXT; ENTXTC; DWPI: 壁纸, 背景, 图, 花样, 复杂, 亮度, 深, 浅, 图标, 时钟, UI, User Interface, background, image, pattern, complexity, luminosity, Deep, light, icon, clock

**C.     DOCUMENTS CONSIDERED TO BE RELEVANT**

| Category* | Citation of document, with indication, where appropriate, of the relevant passages | Relevant to claim No. |
|---|---|---|
| X | US 2016358592 A1 (APPLE INC.) 08 December 2016 (2016-12-08)<br>description, paragraphs 23-58 | 1-18 |
| X | CN 116107465 A (HUAWEI TECHNOLOGIES CO., LTD.) 12 May 2023 (2023-05-12)<br>description, paragraphs 160-233 | 1-18 |
| A | CN 117707380 A (VIVO MOBILE COMMUNICATION CO., LTD.) 15 March 2024<br>(2024-03-15)<br>entire document | 1-18 |
| A | CN 117742557 A (VIVO MOBILE COMMUNICATION CO., LTD.) 22 March 2024<br>(2024-03-22)<br>entire document | 1-18 |

☐ Further documents are listed in the continuation of Box C.      ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **23 February 2025** | **05 March 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/139631**

| Patent document cited in search report | | | Publication date (day/month/year) | Patent family member(s) | Publication date (day/month/year) |
|---|---|---|---|---|---|
| US | 2016358592 | A1 | 08 December 2016 | None | |
| CN | 116107465 | A | 12 May 2023 | None | |
| CN | 117707380 | A | 15 March 2024 | None | |
| CN | 117742557 | A | 22 March 2024 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410661429